# EUROPEAN PATENT SPECIFICATION

(11) **EP 1 182 559 B1**
(45) Date of publication and mention of the grant of the patent: **21.01.2009**
(21) Application number: 00402331.3
(22) Date of filing: 21.08.2000
(51) Int. Cl.: G06F 12/08

(54) **Improved microprocessor**
Mikroprozessor
Microprocesseur

(43) Date of publication of application: 27.02.2002
(73) Proprietor: Texas Instruments Incorporated, Dallas, Texas 75251 (US); TEXAS INSTRUMENTS FRANCE, 06271 Villeneuve Loubet Cedex, Nice (FR)
(72) Inventor: d'Inverno, Dominique, 06270 Villeneuve-Loubet (FR); Chauvel, Gerard, Residence du Valbosquet 20, 06600 Antibes (FR); Kousela, Maija, 06250 Mougins (FR); Lasserre, Serge, 83600 Frejus (FR)
(74) Representative: Holt, Michael

(56) References cited:
- EP-A- 0 442 474
- EP-A- 0 930 574
- US-A- 5 636 364

## Description

This invention generally relates to microprocessors, and more specifically to improvements in direct memory access circuits, systems, and methods of making.

Microprocessors are general purpose processors which provide high instruction throughputs in order to execute software running thereon, and can have a wide range of processing requirements depending on the particular software applications involved. A direct memory access (DMA) controller is often associated with a processor in order to take over the burden of transferring blocks of data from one memory or peripheral resource to another and to thereby improve the performance of the processor.

Many different types of processors are known, of which microprocessors are but one example. For example, Digital Signal Processors (DSPs) are widely used, in particular for specific applications, such as mobile processing applications. DSPs are typically configured to optimize the performance of the applications concerned and to achieve this they employ more specialized execution units and instruction sets. Particularly in applications such as mobile telecommunications, but not exclusively, it is desirable to provide ever increasing DSP performance while keeping power consumption as low as possible.

To further improve performance of a digital system, two or more processors can be interconnected. For example, a DSP may be interconnected with a general purpose processor in a digital system. The DSP performs numeric intensive signal processing algorithms while the general purpose processor manages overall control flow. The two processors communicate and transfer data for signal processing via shared memory.

European Patent Application No. 0 930 574 describes a parallel processor capable of exhibiting a high processing performance, which when receiving as input access requests generating page faults to sub-banks from a plurality of processor elements connected to a common bus and another access request is input while data is being transferred between sub-banks and an external memory via an external access bus in response to the input access requests, a shared memory stores the other access request in a request queue and makes a control circuit execute the stored access request when the stored access request does not generate a page fault. United States Patent No. 5 636 364 discloses a cache-to-memory interface, a means and method for timesharing a single bus to allow the concurrent processing of multiple misses. The multiplicity of misses can arise from a single processor if that processor has a nonblocking cache and/or does speculative prefetching, or it can arise from a multiplicity of processors in a shared-bus configuration.

Particular and preferred aspects of the invention are set out in the accompanying independent and dependent claims.

In accordance with a first aspect of the invention, there is provided a digital system having several processors, a private level 1 cache associated with each processor, a shared level 2 cache having several segments per entry, and a level 3 physical memory. The shared level 2 cache architecture is embodied with 4-way associativity, four segments per entry and four valid and dirty bits. When the level 2-cache misses, the penalty to access to data within the level 3 memory is high. The system supports miss under miss to let a second miss interrupt a segment prefetch being done in response to a first miss. The shared level 2 cache comprises a portion that is Configurable as a RAMset, wherein the RAMset is operable to load a block of segments in an interruptible manner.

In another embodiment, a shared translation lookaside buffer (TLB) is provided for level two accesses, while a private TLB is associated with each processor. A micro TLB (mu TLB) is associated with each resource that can initiate a memory transfer. The level 2 cache, along with all of the TLBs and mu TLBs have resource ID fields and task ID fields associated with each entry to allow flushing and cleaning based on resource or task.

In another embodiment, configuration circuitry is provided to allow the digital system to be configured on a task by task basis in order to reduce power consumption.

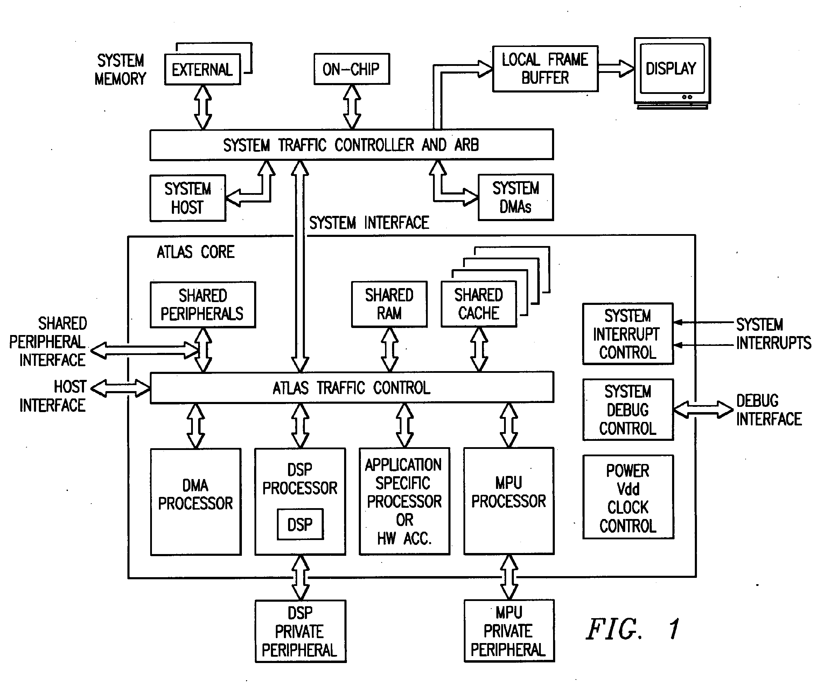

Particular embodiments in accordance with the invention will now be described, by way of example only, and with reference to the accompanying drawings in which like reference signs are used to denote like parts and in which the Figures relate to the digital system of Figure 1 and in which:
Figure 1 is a block diagram of a digital system that includes an embodiment of the present invention in a megacell core having multiple processor cores;
Figure 2 is a more detailed block diagram of the megacell core of Figure 1;
Figure 3 is a block diagram illustrating a shared translation lookaside buffer (TLB) and several associated micro-TLBs ( mu TLB) included in the megacell of Figure 2;
Figure 4 illustrates an entry in the TLB and µTLBs of Figure 3;
Figure 5 is a block diagram illustrating a smart cache that has a cache and a RAM set, versions of which are included in each of the processor cores of Figure 1;
Figure 6 is an illustration of loading a single line into the RAM set of Figure 5;
Figure 7 is an illustration of loading a block of lines into the RAM set of Figure 5;
Figure 8 is an illustration of interrupting a block load of the RAM set according to Figure 7 in order to load a single line within the block;
Figure 9 is an illustration of a level 2 cache in the megacell of Figure 1 that has an interruptible prefetch system, and thereby provides miss under miss support;
Figure 10 illustrates concurrent access of the level 2 cache and level 2 RAM of the megacell of Figure 1;
Figure 11A illustrates a request queue for the level 2 memory system of Figure 10;
Figure 11B is a more detailed block diagram of the level 2 memory system of Figure 10, illustrating the request queue;
Figure 12 illustrates tag circuitry with task ID and resource ID fields in the level 2 cache of the megacell of Figure 2;
Figure 13 is a block diagram illustrating monitoring circuitry within the megacell of Figure 2 to manage cleaning and flushing based on average miss rate measure;
Figure 14 is a block diagram illustrating a priority register in each processor of the megacell of Figure 2 for task based priority arbitration;
Figure 15 is a block diagram of the level 1 caches in the megacell of Figure 2 illustrating control circuitry for interruptible block prefetch and clean functions;
Figure 16 is a block diagram of the cache of Figure 15 illustrating a source/destination register for DMA operation;
Figure 17 illustrates operation of the cache of Figure 16 using only a global valid bit for DMA completion status;
Figure 18 illustrates operation of the cache of Figure 15 in which a block of lines is cleaned or flushed;
Figure 19 illustrates register and arbitration circuitry in the cache of Figure 15 to support local memory with DMA operation simultaneously with RAM set operation in the same RAM set;
Figure 20 illustrates use of a local valid bit to support concurrent DMA and CPU access in the cache of Figure 15;
Figure 21 illustrates operation of the TLB of Figure 3 for selective flushing of an entry for a given task or resource;
Figure 22 illustrates control circuitry for adaptive replacement of TLB entries in the TLB of Figure 3;
Figure 23 is a block diagram of control circuitry in the megacell of Figure 2 for dynamic control of power management systems using task attributes;
Figure 24 illustrates dynamic hardware configuration of the megacell of Figure 2 using task attributes;
Figure 25 illustrates task based event profiling to perform task scheduling for control of power dissipation within the system of Figure 1;
Figure 26 illustrates operation of the level 2 TLB of Figure 2 while being shared between different operating systems;
Figure 27 illustrates operation of the level 1 TLB of Figure 2 while being shared between different memory access requestors operating under a common operating system;
Figure 28A is a representation of a telecommunications device incorporating an embodiment of the present invention; and
Figure 28B is a block diagram representation of the telecommunications device of Figure 28A.

Corresponding numerals and symbols in the different figures and tables refer to corresponding parts unless otherwise indicated.

Although the invention finds particular application to Digital Signal Processors (DSPs), implemented, for example, in an Application Specific Integrated Circuit (ASIC), it also finds application to other forms of processors. An ASIC may contain one or more megacells which each include custom designed functional circuits combined with pre-designed functional circuits provided by a design library.

Figure 1 is a block diagram of a digital system that includes an embodiment of the present invention in a megacell core having multiple processor cores. In the interest of clarity, Figure 1 only shows those portions of microprocessor 100 that are relevant to an understanding of an embodiment of the present invention. Details of general construction for DSPs are well known, and may be found readily elsewhere. For example, U.S. Patent 5,072,418 issued to Frederick Boutaud, et al, describes a DSP in detail. U.S. Patent 5,329,471 issued to Gary Swoboda, et al, describes in detail how to test and emulate a DSP. Details of portions of microprocessor 100 relevant to an embodiment of the present invention are explained in sufficient detail herein below, so as to enable one of ordinary skill in the microprocessor art to make and use the invention.

Referring again to Figure 1, a megacell (Atlas Core) includes a control processor (MPU) and a digital signal processor (DSP) that share a block of memory (RAM) and a cache. A traffic control block (Atlas traffic control) receives transfer requests from a memory access node in the host processor and transfer requests from a memory access node in the DSP. The traffic control block interleaves these requests and presents them to the memory and cache. Shared peripherals are also accessed via the traffic control block. A direct memory access controller (DMA) can transfer data between an external source and the shared memory. Various application specific processors or hardware accelerators (HW Acc) can also be included within the megacell as required for various applications and interact with the DSP and MPU via the traffic control block.

External to the megacell, a second traffic control block (System Traffic Controller) is connected to receive memory requests from the Atlas traffic control block in response to explicit requests from the DSP or MPU, or from misses in the shared cache. Off chip memory (external) and/or on-chip memory is connected to the system traffic controller. A frame buffer (local frame buffer) and a display device (Display) are connected to the system traffic controller to receive data for displaying graphical images. A host processor (system host) interacts with the resources on the megacell via the system traffic controller. A set of peripherals (DSP Private) are connected to the DSP, while a set of peripherals (MPU Private) are connected to the MPU.

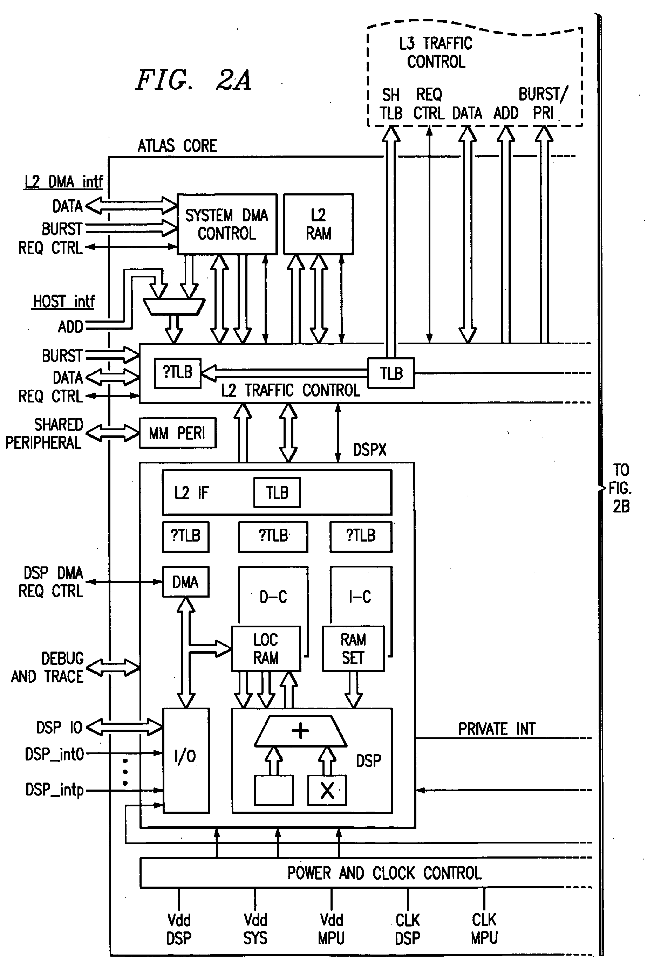

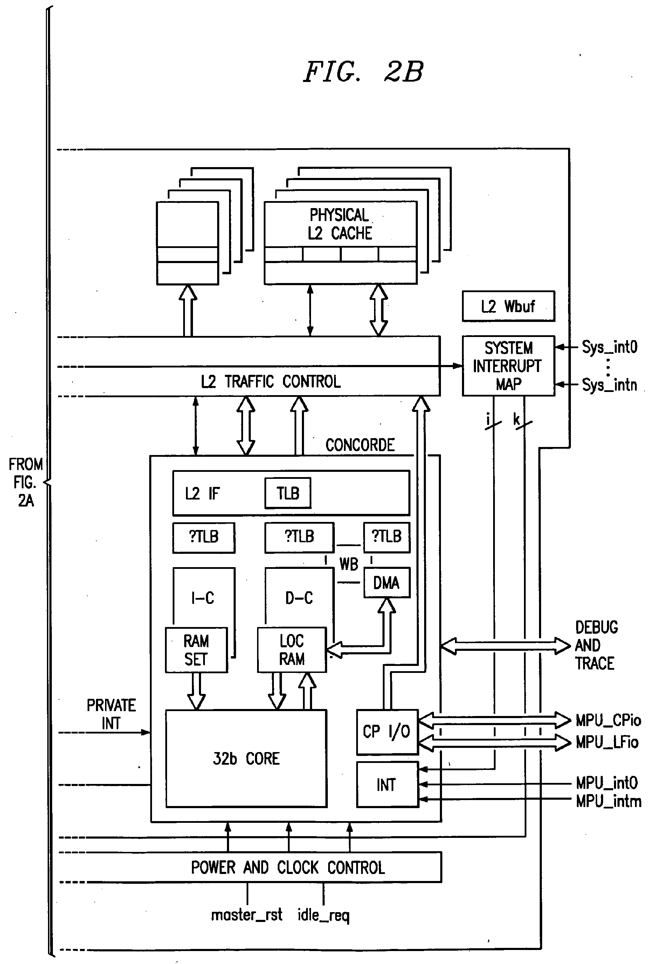

Figure 2 is a more detailed block diagram of the megacell core of Figure 1. The DSP includes a local memory (Loc RAM) and data cache (D-C), a smart cache that is configured as instruction cache (I-C) and a block of memory (RAM set). The DSP is connected to the traffic controller via a level 2 interface (L2 IF) that also includes a translation lookaside buffer (TLB). A DMA circuit is also included within the DSP. Individual micro TLBs (µTLB) are associated with the DMA circuit, data cache and instruction cache.

Similarly, the MPU (Concorde) includes a local memory (Loc RAM) and data cache (D-C), a smart cache that is configured as instruction cache (I-C) and a block of memory (RAM set). The MPU is connected to the traffic controller via a level 2 interface (L2 IF) that also includes a TLB. A DMA circuit is also included within the MPU. Individual micro TLBs (µTLB) are associated with the DMA circuit, data cache and instruction cache.

The L2 traffic controller includes a TLB and a micro-TLB (µTLB) that is associated with the DMA block (Sys DMA).

### Memory Management Unit

At the megacell traffic controller level, all addresses are physical. They have been translated from virtual to physical at the processor sub-system level by a memory management unit (MMU) associated with each core. At the processor level, access permission, supplied through MMU page descriptors, is also checked, while at the megacell level protection between processors is enforced by others means, which will be described in more detail later.

An address reference is generally located within the µTLB or main TLB of each processor sub-system; however, but some references, such as those used by DMA/Host/... to access megacell memories can be distributed within the L2 traffic controller and cached into L2 system shared TLB. Because system performance is very sensitive to the TLB architecture and size, it is important to implement efficient TLB control command to flush, lock or unlock entry when a task is created or deleted without degrading the execution of other tasks. Therefore, each µTLB and each cache entry holds a task-ID, also called ASID. During execution, the current task-ID register is compared with the µTLB entry, this also provides better security, as will be described later. During MMU operation, commands are supplied to flush locked or unlocked entries of a µTLB corresponding to a selected task.

To provide maximum flexibility, the MMU is based on a software table walk, backed up by TLB caches both at the processor sub-system and megacell level. This allows easy addition of new page size support or new page descriptor information if required. A TLB miss initiates a MMU handler routine to load the missing reference into the TLB. At the megacell (ATLAS Core) level, the TLB miss is routed via the system interrupt router to the processor having generated the missing reference or to the processor in charge of the global memory management.

The MMU provides cachability and bufferability attributes for all levels of memory. The MMU provides also the information "Shared" to indicate that a page is shared among multiple processors (or task). This bit, as standalone or combined with the task-ID, allows specific cache and TLB operation on data shared between processors or/and tasks.

All megacell memory accesses are protected by a TLB. As they all have different requirements in term of access frequencies and memory size, a shared TLB approach has been chosen to reduce the system cost at the megacell level. This shared TLB is programmable by each processor. The architecture provides enough flexibility to let the platform working with independent operating systems (OS) or a distributed OS with a unified memory management.

The present embodiment supports page size of 1K, 4K, 64K and 1 MB, but other embodiments might have TLB hardware supporting other additional page sizes.

The organization of the data structures supporting the memory management descriptor is left open since each TLB miss is resolved by a software TLB-miss handler. These data structures include the virtual-to-physical address translation and all additional descriptors to manage the memory hierarchy. The list of these descriptors and their function is described below. Table 1 includes a set of memory access permission attributes. In other embodiments, a processor may have other modes that enable access to memory without permission checks.

**Table 1 - Memory Access permission**

| Supervisor | User | Description |
|---|---|---|
| No access | No access | |
| Read only | No access | |
| Read only | Read only | |
| Read/Write | No access | |
| Read/Write | Read only | |
| Read/Write | Read/Write | |

Execute Never: provides access permission to protect data memory area from being executed. This information can be combined with the access permission described above or kept separate.
Shared: indicates that this page may be shared by multiple tasks across multiple processor.
Cachability: Various memory entities such as individual processor's cache and write buffer, and shared cache and write buffer are managed through the MMU descriptor. The options included in the present embodiment are as follows: Inner cachable, Outer cachable, Inner Write through/write back, Outer write through/write back, and Outer write allocate. The terms Inner and outer refer to levels of caches that are be built in the system. The boundary between inner and outer is defined in specific embodiment, but inner will always include Level 1 cache. In a system with 3 levels of caches, the inner correspond to level 1 and level 2 cache and the outer correspond to level 3 due to existing processor systems. In the present embodiment, inner is Level 1 and outer is Level 2 cache.
Device: all accesses to this type of location must occur in program order. All device regions must also be marked as non-cacheable. Accesses to device memory are kept in their size (no burst).
Blocking/non blocking: determines if a write must be acknowledged on completion of write (D-ack) or as soon as the write transaction has been acknowledge (T-ack)
Endianism: determines on a page basis the endianess of the transfer.

### MMU/TLB control operation

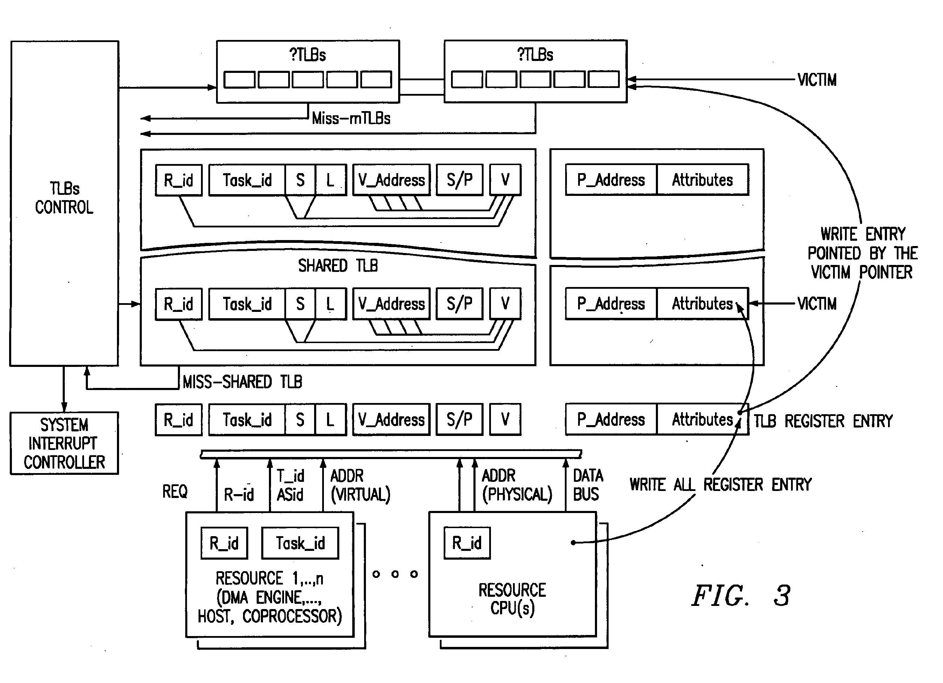

Figure 3 is a block diagram illustrating a shared translation lookaside buffer (TLB) and several associated micro-TLBs (µTLB) included in the megacell of Figure 2. On a µTLB miss, the shared TLB is first searched. In case of a hit on the shared TLB, the µTLB that which missed is loaded with the entry content of the shared TLB. In case of miss, the shared TLB generates an interrupt to the processor whose OS supervises the resource which caused the miss, and both shared and µTLBs are loaded. The priority on this shared TLB is managed in the same way as priority on memory access. One or more resources can be using the shared TLB. One or more resources can program the shared TLB. The replacement algorithm in the shared TLB is under hardware controlled. However, in an embodiment in which the system has a master CPU with a distributed OS, this master CPU could also bypass the replacement algorithm by selecting a victim entry, reading and writing directly to the Shared TLB.

A resource identifier is loaded into the TLB along with the task-ID. Resource-IDs and task IDs are not extension fields of the virtual address (VA) but simply address qualifiers. With the task-ID, all entries in a TLB belonging to a specific task can be identified. They can, for instance, be invalidated altogether through a single operation without affecting the other tasks. Similarly, the resource ID is required because task-ID number on the different processors might not be related; therefore, task related operations must be, in some case, restricted to a resource-ID. The TLB cache also includes the "shared" bit and a lock bit for each of its entry. At system initialization, all R-ID and Task-ID registers distributed across the system are set to zero, meaning that the system behaves as if there were no such fields.

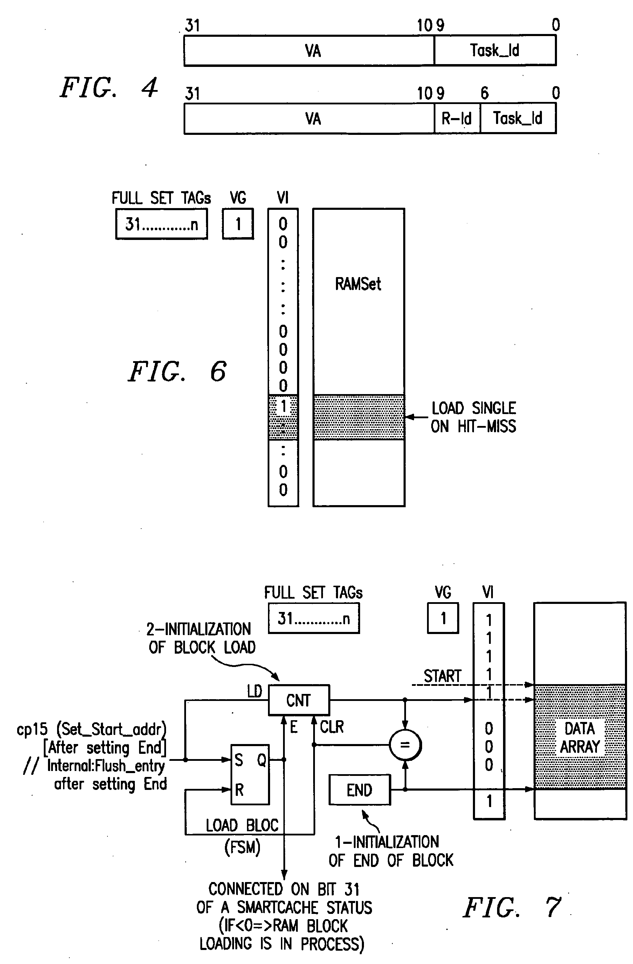

Figure 4 illustrates an entry in the TLB and µTLBs of Figure 3. A processor can initiate the following operations: Invalidate entry with VA, Invalidate all entries related to a Task_ID, Invalidate all entries related to a R_ID, Invalidated all shared entry, Invalidate All entries, Lock/UnLock entry, and Lock/Unlock all entries related to a task_ID/R-ID. Invalidate entry: The Virtual address (VA), the associated task identifier and the resource identifier in the following format are stored at a specific address. This generates an entry invalidate operation on the corresponding address, task-id and R-Id. Note that all processors of MEGACELL might not be allowed to invalidate entries others than their own. In that case, the R_Id field is replaced by the R-Id, which comes from the R-Id processor register along with the address.
Invalidate all entries related to a task (task_ID): This operation invalidates all entries corresponding to the provided task identifier. Note that all processors of the megacell might not be allowed to invalidate entries related to a task others than the one they managed. This provides, however, the capability to a master processor to free space from the shared TLB by invalidating all entries of a task belonging to another processor. This operation invalidates all the entries corresponding to the provided task and resource identifier or to a task of the resource requesting the operation.
Invalidate all entry related to a Resource (R-Id): This operation invalidates all entries corresponding to the provided resource identifier. Note that all processors of the megacell might not be allowed to invalidate entries others than their own. This provides, however, the capability to a master processor to free space from the shared TLB by invalidating all entries of another processor.
Invalidated all shared entries: This operation invalidates all entries in the TLB marked as shared of the requester. Similarly, the R-ID limits the effect of this operation like the above operations.
Invalidate all entries: This operation invalidates all entries in the TLB matching the R-ID of the requester. If all R-ID registers, distributed in the system are equal, this operation invalidates all entries. In addition, as we might still want to have different R-ID for DMA engine than for CPUs, a global bit also allows to enable/disable the R-ID comparison.
Lock/unlock entry: "Lock/unlock entry" is done in providing the VA, task-ID and R-Id, which needs to be locked/unlocked. Restriction on R-ID applies as above.
Lock/unlock all entry related to a task: Lock/unlock is done in providing the task identifier which needs to be locked/unlocked. Restriction on R-ID applies as above.

In the case in which an independent OS is running on each processor, each OS can initiate the above operations. In that case, these operations must be restricted to entries with a resource identifier (R-Id) belonging to the requester.

In the case of a single master OS, task and memory management can be viewed as unified, removing the need of R-Id. The R-ID can be an extension of the task-ID and as such it comes out of each core or it is hard-coded for each processor, in which case R-id comparison must configurable as enable/disable. The former provides more flexibility and removes some complexity in the TLB management: disabling the R-ID is equivalent to having a single RID for all the system or for part of the system.

A global control bit will also determines if all the above functions must be limited to the entry corresponding to the resource ID requesting the operation.

Although it is preferable to have the same page size for memory management on all processors, it is not mandatory. In a shared system, the TLB supports all page sizes of the system.

Other operations to support more specifically the software TLB handler provides access to the shared system TLB: Read TLB entry, Write TLB entry, Check (and select victim TLB entry), and Set victim TLB entry.
Read TLB entry: Read entry pointed by the victim pointer into the TLB entry register.
Write TLB entry: The content of the TLB entry registers is only written to the TLB if no match occurs.
Check (and select victim TLB entry): the check and select operation has multiple functions. Its first purpose is to determine an index value for the replacement of an entry. However, it can also be used to find out if an entry in already in the TLB.

The check and select operation starts from the victim pointer current value (there might be a random algorithm done in hardware working in background) . During the search, if none of the entry matches, the victim pointer takes the value of the first index that follows the current index value and which is not locked. If all TLB entries are locked, a flag is raised. If a matching entry is found, the victim entry points to this matching entry, a flag is raised.

### Shared cache and RAM

The megecell includes large shared memories working as a secondary level of cache (L2 Cache) or RAM (L2 RAM). This level of memory is preferably called the outer level, as each processor includes an inner level 1 memory subsystem within the memory hierarchy. The megacell outer memory is organized as what's called a SmartCache, allowing concurrent accesses on cache and RAMset. RAMset is a block of RAM that has aspects of cache behavior and cache control operations as well as DMA capability. The SmartCache architecture provides predictable behavior and enhanced real-time performance while keeping high flexibility and ease of use

MEGACELL "outer" memory can be shared between MEGACELL internal processors and external Host processors or peripherals. RAM usage can also be restricted to the usage of a single processor thanks to the MMU mechanism. However, a need might arise in the MEGACELL to add additional physical protection per processor on some part of MEGACELL memory to overwrite the MMU intrinsic protection.

MEGACELL unified shared cache architecture of this embodiment is a four way set associative cache with segmented lines to reduce system latency. All outer memories are connected as unified instruction/data memory to avoid compiler restrictions such as data in program space or vice-versa. Size of this cache or number of associated RAMset may vary in other embodiments.

RAMset control registers are memory mapped and therefore also benefit from the protection provided by the MMU. However, this would force operations on cache or any specific RAMset to be on separate pages for protection reasons. Therefore, a control register is provided to configure how and by which CPU the various part of MEGACELL memory are controlled. All CPUs can execute operations such as cache flushing or cache cleaning as these operations will be restricted by the Resource identifier field located in the TAG area of the cache

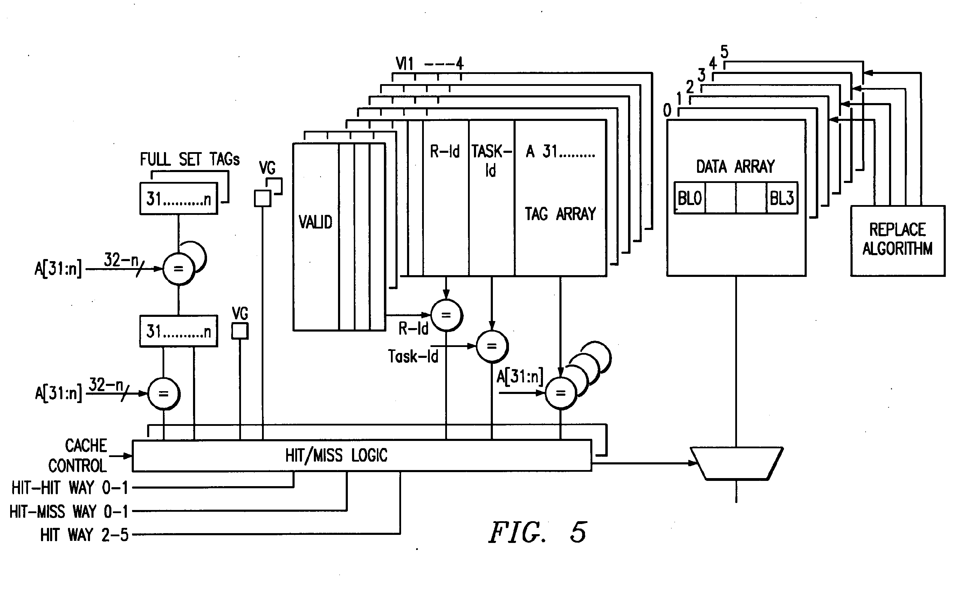

Figure 5 is a block diagram illustrating a smart cache that has a cache and a RAM set, versions of which are included in each of the processor cores of Figure 1. As discussed above, the SmartCache is composed of a 4-way set-associative cache (TAG Array and Data array 2-5) and one or more additional RAM set (Data array 0, 1). The Ramset can be configured as a cache extension or as a block of RAM. When configured as RAM, a loading mechanism is provided by a separate DMA engine to optimize data transfer required by multimedia applications.

In the embodiment of Figure 5, the RAM Set has two different sized data arrays (Data array 0, Data array 1); however, other embodiments may specify all RAM sets with the same size to simplify the hardware logic and the software model.

Each RAM set has an associated TAG register (Full set TAG) containing the base address of the RAM set and a global valid bit (VG) in addition to an individual valid bit (Valid), referred to as VI, for each line (entry). In the present embodiment, RAM set lines have the same size as the cache lines; however, in other embodiments longer line can also be used to reduce the number of VI bits.

A control bit (cache control) for each RAMSet provides the capability to configure it as a cache extension (RAM set) or as a RAM.

When configured as a RAM, this memory does not overlap with other memories in the system. This memory space is mapped as non-cacheable at the outer level. The RAM control logic (address decode) generates a hit equivalent signal, which prevents the outer cache from fetching the missing data/instruction to the external memory. The VG bit acts as an enable/disable. It is set when the set_base_addr is written to and cleared when the RAM is invalidated or disabled.

If the register base address of the RAM is programmed in such way that the associated memory area overlays with the external memory, coherency is not guaranteed by hardware.

When configured as a cache (SmartCache), control circuitry (hit/miss logic) generates hit/miss signals called hit-hit and hit-miss for each RAMset. A hit-hit is generated when a valid entry of the RAM Set matches the address provided by the core. An entry is valid when both VG and its VI are set. A hit-miss signal is generated when the base address of the RAM is valid (VG = 1) and matches the top address provided by the core but the selected entry in the RAM set has its VI equal to zero.

The hit-miss or hit-hit signal has precedence over the hit way of the 4-way set-associative cache. This implies that any value loaded previously in the cache that should be in the RAM set is never selected and will eventually be removed from the cache. However, data can create coherency problem in case of modified data (copy back). Therefore, it is recommended to write back ("clean") or even flush the range of address that will correspond to the RAMset range of addresses.

The RAM set can be loaded in two ways: Line-by-line fill, and Complete fill/ block fill. Figure 6 is an illustration of loading a single line into the RAM set of Figure 5. When a new value is written into the full-set TAG register (base address), all content of the RAMSet is invalidated. Following the programming of the base address register, the RAM set is going to fill itself one line at a time on every hit-miss located in the RAM set.

Figure 7 is an illustration of loading a block of lines into the RAM set of Figure 5. The block fill is based on two additional registers called Start (CNT) and End (END). Start is an n-bit counter and End an n-bit register, for which n depends on the size of the RAM set. If two RAM sets have different sizes some of the top bits will be invalidated accordingly in the control logic when the associated RAM set is selected.

Writing a value in the End register sets the RAM Set control in block fill mode for the block loading. Setting the Start address after setting the End initiates a block transfer. Setting the Start address without previously setting the end address or writing the same value in start and end simply loads the corresponding entry.

In the case of multiple RAM Sets, the start address determines in which RAM set the block load is directed. The selection of the RAM set is done by comparing the top part of the start address with the contents of the RAM set base address and loading the bottom part in the counter (CNT). If the start address is not included inside any of the RAM set, the instruction behaves like a prefetch block or respectively as a prefetch-line on the cache. Depending on the End and Start values, the block size can vary from one line to n lines.

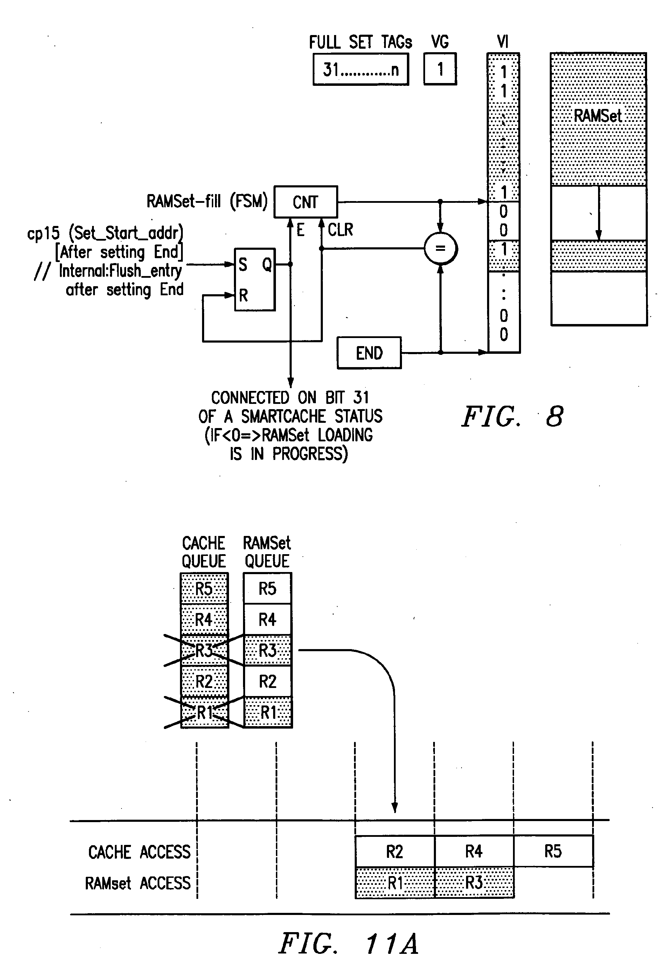

Figure 8 is an illustration of interrupting a block load of the RAM set according to Figure 7 in order to load a single line within the block. To reduce system latency, the megacell processors, referred to generically as CPU, can still access both cache and RAMset when block loading is in progress; therefore, the following can happen:
(1) The CPU accesses a line already loaded. The CPU is served immediately or after one cycle stall (conflict with a line load).
(2) The CPU accesses a line not yet loaded (hit-miss). The CPU is served after the completion of the on-going line load.

Each line load is done in two indivisible steps, first the entry presence is checked (valid bit set), then only if the line is not already present in the cache or in the RAMSet, it is loaded.

Before initiating a block load by programming new values in End and Start, the status must be checked to see that no previous block load is on-going. There is no automatic hardware CPU stall on this case and doing so would cause the on-going block load to stop. This could result in an unexpected long latency in a real-time applications for accesses into the RAMset in which the block load was interrupted in this manner.

### Cache features

The MEGACELL unified cache memory supports write back, write through with/without write-allocate on a page basis. These controls are part of the MMU attributes. Hit under miss is supported to reduce conflicts between requesters and consequent latency. Concurrent accesses on RAMsets and cache are supported.

On a cache miss, the segment corresponding to the miss is fetched from external memory first. For example, if the miss occurs in the second segment, the second segment is fetched; then, the third segment and finally the fourth segment is loaded into MEGACELL cache automatically, referred to as automatic hardware prefetch. The first segment is not loaded into the cache. This sequence of loads can be interrupted on a segment boundary by a miss caused by a request having higher priority. The interrupted load is not resumed, as the remaining segments will be loaded if required later in response to a new miss.

Each segment has a valid bit and a dirty bit, on a write back when a line is replaced only the segments with modified data are written back.

RAMSet configured as a RAM offers fast memory scratchpad feature.

In this embodiment, RAMsets do not have Task_ID and R-ID fields and shared bit marker associated with each line. Operations on task_ID, R-ID, data marked as shared are limited to the cache. However, other embodiments may harmonize the RAMset and cache.

Multi-cycle operations on the MEGACELL outer cache are nonblocking. A Multicycle cache operation is launched and a status bit indicates its completion. As operations can be initiated by several requesters, these operations can not be blocking due to real time constraints. If one processor initiates a clean_all_task_ID or a block operation, other request can interleave

The hit logic of the outer cache only uses the address field. Task-Id and R-Id are used in task operation only.

A random cache replacement strategy has been chosen for the replacement algorithm of the 4-way set associative caches. In this embodiment, the caches do not support cache entry locking except through the RAMSet.

Table 2 includes a listing of the various cache and RAM control operations that can be invoked by the processors in the megacell. In this embodiment, all operations on an entry operates on segments, in fact, there are four segment per entry.

**Table 2 - Cache and RAM control operations (C: operation on the cache, RS: operation on RAMset, R: operation on RAM)**

| Function | | Software view (memory mapped/ co-proc) |
|---|---|---|
| Flush_entry (address) | C/ RS | Flush the entry¹, whose address matches the provided address or a Range of addresses, if End has been set previously. Flush-range instruction is made of two consecutive instructions Set_End_addr(address) + Flush_entry (address). |
| Flush_all_entry_of_ task_ID(task_ID) | C | Flush all entries matching to the current taskID in the cache but not in the RAMSet |
| Flush_all_entry_of_ R_ID(task_ID) | C | Flush all entries matching to the current R_ID in the cache but not in the RAMSet |
| Flush_all | C | Flush all entries in the cache but not in RAMSet |
| Flush_all_shared | C | Flush all entries marked as shared |
| Flush_all_task_ID_ shared(task_ID) | C | Flush all entries matching the current taskID and marked as shared |
| Flush_all_task_ID_n ot_shared (task_ID) | C | Flush all entries matching the current taskID and marked as not shared |
| Clean_entry (address) | C/ RS | Clean the entry¹, whose address matches the provided address or a Range of address if End has been set previously. Clean-range instruction is made of two consecutive instructions Set_End_addr(address) + Clean_entry (address). |
| Clean_all_entry_of_ taskID(task_ID) | C | Clean all entries matching to the current taskID in the cache but not in the RAMSet |
| Clean_all_entry_0f_ R_ID(task_ID) | C | Clean all entries matching to the current R_ID in the cache but not in the RAMSet |
| Clean_all | C | Clean all entries in the cache but not in RAMSet |
| Clean_all_shared | C | Clean entries marked as shared |
| Flush_all_task_ID_ shared(task_ID) | C | Flush all entries matching the current taskID and marked as shared |
| Clean_all_taskID_no t_shared(Task_ID) | C | Clean all entries matching the current taskID and marked as not shared |
| Clean&Flush_single_ entry(address) | C/ RS | Clean and flush the entry¹, whose address matches the provided address or a Range of address if End has been set previously. Clean-range instruction is made of two consecutive instructions Set_End_addr(address) + Clean_entry (address). |
| Clean&flush_all_ entry_of_taskID (Task_ID) | C | Clean and flush all entries matching to the current taskID in the cache but not in the RAMSet |
| Clean&flush_all_ent ry_of_R_ID (Task_ID) | C | Clean and flush all entries matching to the current R_ID in the cache but not in the RAMSet |
| Clean&flush_all | C | Clean and flush all entries in the cache but not in RAMSet |
| Clean&flush_all_ shared | C | Clean and flush entries marked as shared |
| Clean&flush_all_ taskID_shared (task_ID) | C | Clean and flush all entries matching the current taskID and marked as shared |
| Clean&flush_all_ taskID_not_shared (task_ID) | C | Clean and flush all entries matching the current taskID and marked as not shared |
| Set_RAM_Set_Base_ addr(RAMSetID) | RS /R | Set new RAM set base address, set VG and clear all VI and set End to last RAM set address by default preparing the full RAM set loading. In that case no need to write the END address before writing the start address to load the RAM set |
| Set_End_Addr (address) | C/ RS | Set end address of the next block load and set the RAM set controller in block fill mode. |
| Set_start_addr (address) | C/ RS | Set start address of a block and initiates the loading of this block |
| Flush_RAMset (RAMset_ID) | RS /R | Clear VG and all VI of the selected RAM Set |

Each RAMset has a RAMset base address register, RAMset-base[n]. RAMset base registers are coupled with a logical comparison on the address for each requester.

A control register is provided for controlling access, RAMset-ctrl[n]
Bit[0]: 0 MPU master. Only the MPU can write to this register 1 DSP master. Only the DSP can write to this register
Bit[1]: 0/1 RAMset work as a cache or as a RAM
RAMSet master bit: each RAMset can be controlled by one or the other processor: write access to the register base

A status register provides cache information, including number of RAM set, sizes, Cache number of way, and line size.

### Endianness

A system with the MEGACELL will sometimes be deployed in situations that involves mixed endianness. Some processors will be bi-endian with a specific endianness selected at reset or on a memory region basis. The "endianness" of a processor is a property that describes the orientation of external data when it arrives at the processor's external data bus. A processor is little (respectively, big) endian if data objects with ascending addresses will appear at more (respectively, less) significant places on the data bus.

The endianness behavior of the Megacell is defined assuming that the addressable unit of memory is an 8-bit byte, the width when referencing a processor's external memory interface is 32 bits, and any shifting required to access objects smaller than 32 bits occurs inside the processor, i.e., no shifting is required between the external memory interface and the memory.

The fundamental requirement is that external memory be connected to the processor memory interface in such a manner that accesses to 32-bit (aligned) objects yield the same results in both big and little endian modes of operation, whether within different tasks on a single processor or within different processors. As an example, suppose that the 32-bit value 0xDDCCBBAA is stored in the 32-bit memory cell containing address @1000. Endian invariance means that the data lines from the memory must be connected to data portion of the processor's memory interface in such a manner that 0xDD is wired to the most significant byte of the data bus and 0xAA is wired to the least significant byte; this connection does not depend on the endianness of the processor.

Endian invariance does not extend to objects smaller than 32 bits. If the processor writes the 8-bit value 0xEE to a location with byte address 1, then the byte overwritten in memory will be the one containing 0xBB if the processor mode is little endian and 0xCC if it is big endian. Similarly, writing the 16-bit value 0xFFEE to location 2 will overwrite 0xDDCC if the processor mode is little endian and 0xBBAA if it is big endian. In other words, data objects, smaller than the size of the data portion of the external memory interface, require positioning on the data bus that is offset from the most significant end of the bus if the mode is big endian and from the least significant end if the mode is little endian. These offsets are implemented in MEGACELL on a region basis (page) by conditionally complementing byte enables based on the endianness mode included in the MMU page entry.

An access permission fault is generated when the MMU page Endianism does not fit with the corresponding device Endianism.

### Host interface

The host interface allows access to MEGACELL internal and external memories. These accesses are protected by a µTLB controlled by one of the MEGACELL processor. When an address is missing from the µTLB, it searches the shared TLB. If a miss occurs in both, an interrupt is returned to the processor in charge of the host. Two registers are associated with the host interface to determine the resource identifier (R-Id) and the task identifier allocated to the host. There is also a control register in the megacell that includes a bit to select which CPU is in charge of controlling the host.

### Detailed aspects

Various aspects of the digital system of Figure 1 will now be described in more detail.

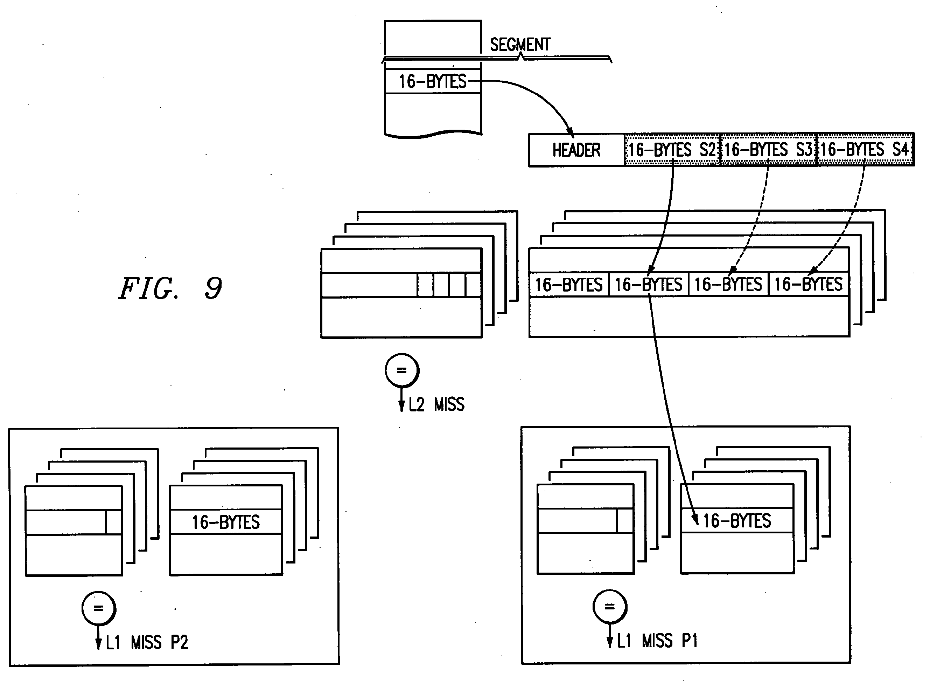

Figure 9 is an illustration of a level 2 cache in the megacell of Figure 1 that has an interruptible prefetch system, and thereby provides miss under miss support. As described above, the level 2 cache architecture is embodied with 4-way associativity, four segments per entry and four valid and dirty bits. When the level 2-cache misses, the penalty to access to data within the level 3 SDRAM is high. The system supports miss under miss to let another miss interrupt the segment prefetch. For example, when a processor P1 access to its Level 1 cache misses and the Level 2 cache misses, the Level 2-cache controller transfer one or several segments of 16 Bytes from the SDRAM to the cache line. The controller generates the address header and one or several segments of 16 Bytes can be transferred for the same request. If, for example, segment 2 misses then the controller fetches segment 2 and prefetches segments 3 and 4. During the miss time other request that hit the level 2 cache can be served. Subsequently, if a processor P2 misses the level 2 cache, the ongoing prefetch sequence for processor P1 is stopped and the P2 miss is served. Thus, an interruptible SDRAM to L2-cache prefetch system with miss under miss support is provided.

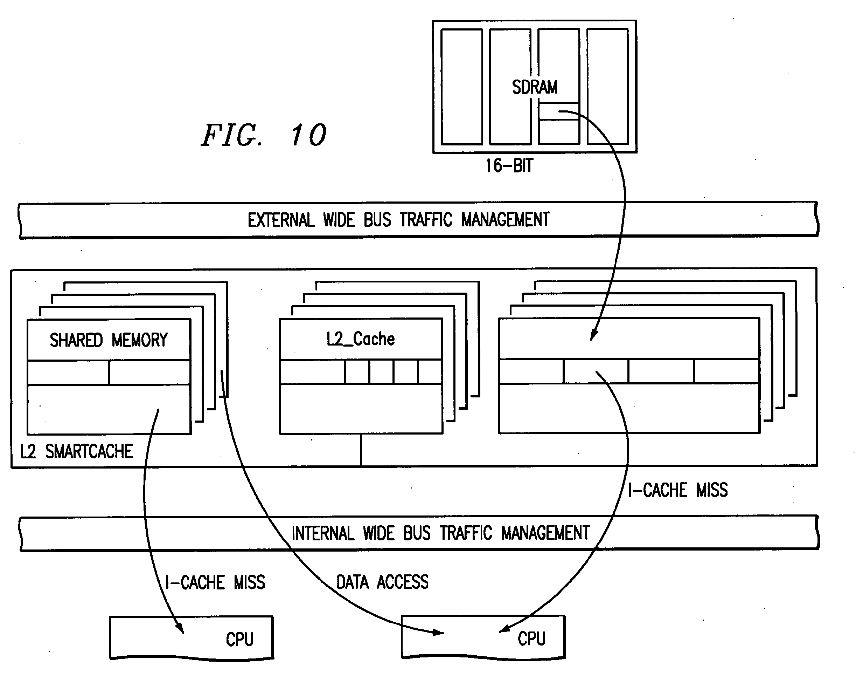

Figure 10 illustrates concurrent access of the level 2 cache and level 2 RAM of the megacell of Figure 1. The shared L2-SmartCache's RAM and Cache sets can be accessed concurrently. When different processors request an access to memory space stored in different memory blocks the system services accesses in parallel. Parallel decode is done on RAMSets to reorder accesses not located in RAMsets on the 4-way set associative part of the Smartcache. If a concurrent access is not possible because the two memory spaces corresponding to the requests is in the same memory block, then the request are served sequentially.

Figure 11A illustrates a request queue for the level 2 memory system of Figure 10. The system contains a request queue that stores the waiting access request from different processors. The system evaluates any possible concurrency within the waiting list and serves accesses in parallel when different processors access different memory blocks. Hit logic for L2-SmartCache supports concurrent access request.

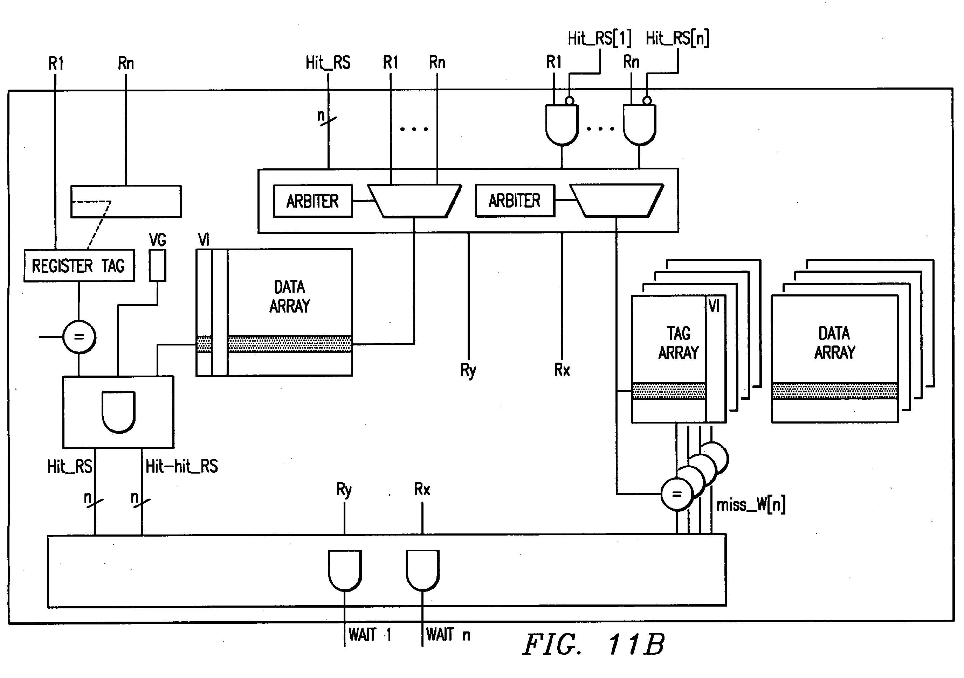

Figure 11B is a more detailed block diagram of the level 2 memory system of Figure 10, illustrating the request queue circuitry.

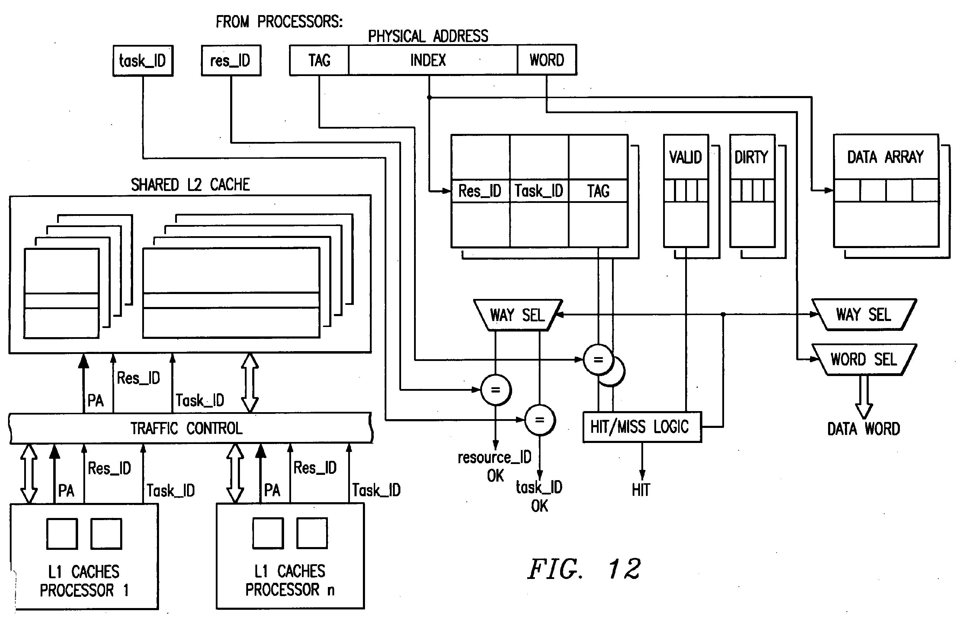

Figure 12 illustrates tag circuitry with task ID and resource ID fields in the level 2 cache of the megacell of Figure 2. As discussed earlier, the shared multiprocessor L2_cache architecture has a task_ID field and Resource_ID field to identify the device using the corresponding resource and task. Adding task-ID and R-ID to shared level-2 cache identifies all entries belonging to a task or/and to resource. This provides improved system safety.

In a dynamic system environment and at fortiori in a multiprocessor system with shared memory cache, it becomes mandatory due to the cache size to have selective control over cache to improve performance and reduce power consumption. Task-ID and resource-ID have been added to the TAG array as a qualifier field for cache operation such as flush (invalidate), clean or even lock/unlock. All entries of the shared system cache belonging to a task or respectively to one of the system resource (CPU, coprocessors,...) can be identified within a single cache command, as illustrated in Table 2.

On detection of the command "flush_all_entry_ related_to_task_ID" issued by the MPU, a hardware counter is incremented to search all the L2_cache and the command flushes all entries belonging to the given task identifier (task-ID) or/and to the given resource identifier (R-ID). At each iteration of the hardware loop, the task-ID, or/and respectively the R-ID, field is compared with the task-ID, or/and respectively the R-ID, provided through the command. In case of match, the entry is flushed out. Similarly, the system supports clean and clean&flush operations based on task-ID field and R-ID field. This fast hardware looping mechanism is also applied to a one-bit field called "shared". Similarly, all entry marked as "shared" can be cleaned or flushed out through a single command. The master CPU, or any CPUs in the system within their R-ID limits, can initiate these commands. Ordinary accesses, resulting from a L1-miss, will stall these commands, which are then automatically resumed after the ordinary access is satisfied. In another embodiment, this feature could also be applied to an L1 cache; however the benefit would probably be lower due to smaller L1 cache size.

In this embodiment, a hardware loop controlled by a single command is provided by a state machine under control of the MPU to clean or flush all entries of a given task. In another embodiment, a similar state machine can be under control of the DSP or a an external host processor. Alternatively, control circuitry can be provided to perform the clean or flush operation in a simultaneous manner for all entries, rather than operating in a looping manner.

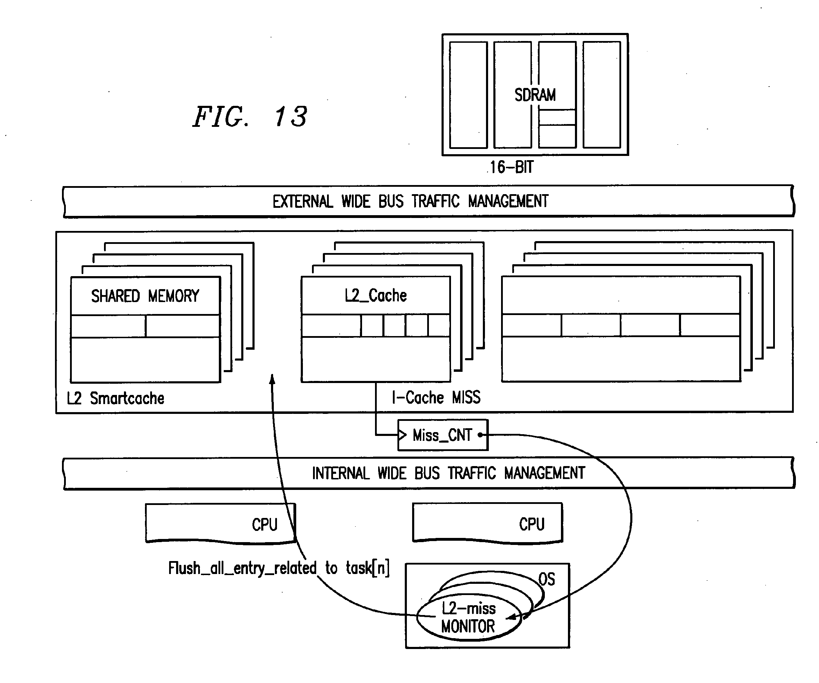

Figure 13 is a block diagram illustrating monitoring circuitry within the megacell of Figure 2 to manage cleaning and flushing based on an average miss rate measure. For large caches the penalty to clean or flush is high even if only the entries corresponding to a task or resource are considered. If the cache is not flushed at some point of time, the miss rate may increase. Therefore, in the current embodiment, the OS periodically monitors the miss rate counter (Miss_CNT) and uses the miss rate to decide when to flush the entries corresponding to a task or resource recently deleted.

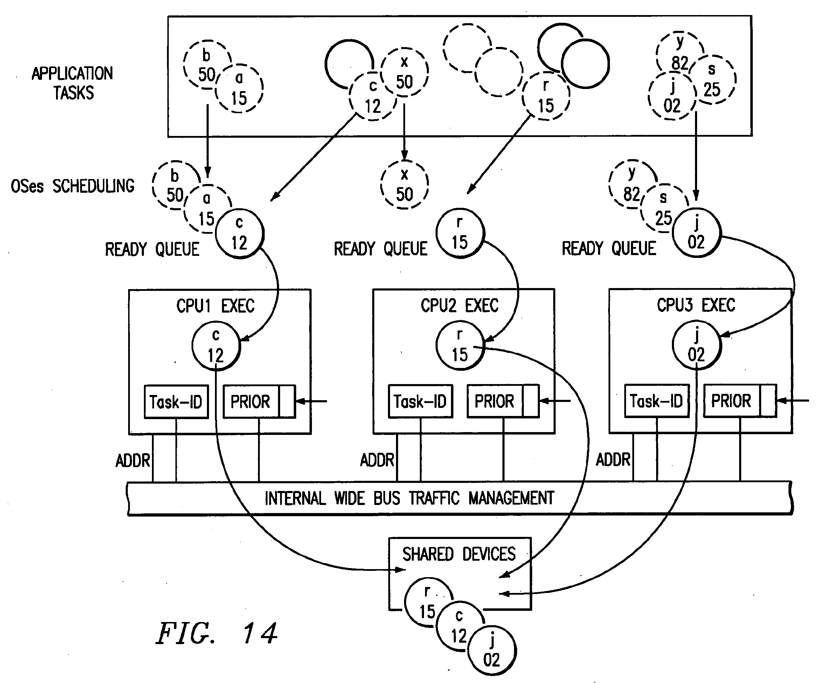

Figure 14 is a block diagram illustrating a priority register in each processor of the megacell of Figure 2 for task based priority arbitration. A priority register is associated with the task_ID register in the processor. The priority field is exported to the traffic control logic. In a first embodiment with a simple solution with 1+1 bits only, one is set by the hardware when an interrupt (or an exception) occurs. The OS controls both bits but an application only controls the second bit.

In an alternative embodiment, 1+n bits are provided for the OS priority field (in general n=8-bits). In either embodiment, the 2 bits or n+1 bits are used to control the priority of accesses to the Megacell shared resources.

Two fields are used to determine the access priority to the shared resources. One field comes from the processor and carry the priority associated to the current task and the second field comes from the MMU TLB that contains the priority of a given MMU page. The highest value is used for priority arbitration.

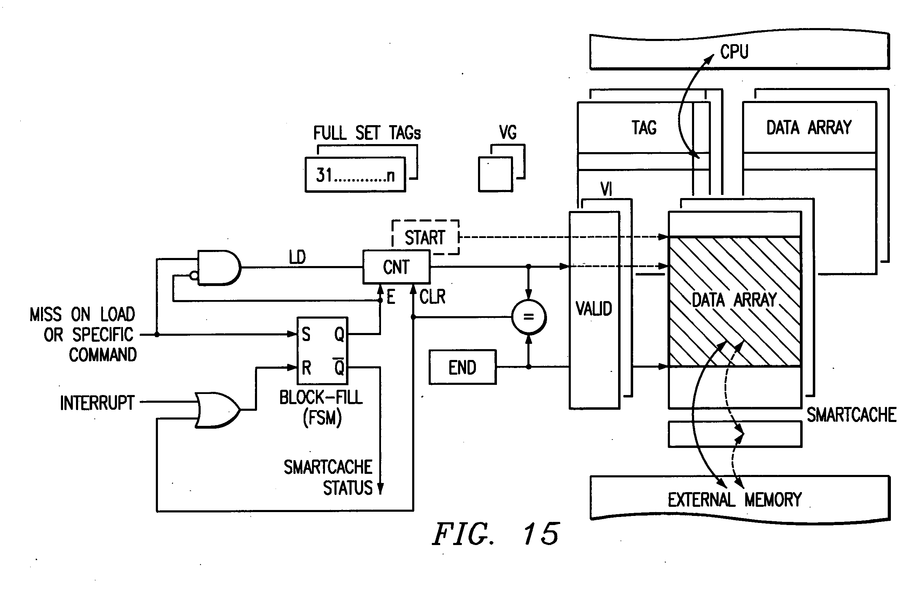

Figure 15 is a block diagram of the level 1 caches in the megacell of Figure 2 illustrating control circuitry for interruptible block prefetch and clean functions. As discussed earlier, the RAMSet of the SmartCache can be managed in chunks of contiguous memory. Standard cache operations such as miss resulting from a CPU read access on the RAMSet or clean entry are respectively changed into block prefetch operation or block cleaning operation if the end of block register has been previously programmed. These block operations can also result from the programming of two registers end-of-block and start-of-block. These prefetch/clean operations are interruptible on the completion of a line to guarantee maximum latency for real-time systems. The block prefetch operation can re-use the existing hardware used for full cleaning of the cache or have a different counter. During the block operation the CPU can be in wait and its activity is resumed on reception of an interruption which stops the current block operation or the CPU can be concurrently running with a single cycle stall during line transfer in the write/read buffer.

Thus, the present embodiment provides an interruptible prefetch block on RAMSet using current cache mechanism: miss on load and clean entry after programming the end-of-block register, the CPU being in wait during block operation.

The present embodiment provides the ability to prefetch block on RAMSet using the cache mechanism: miss on load and clean entry after programming the end-of-block register with concurrent CPU cache and/or RAMSet access.

The present embodiment provides performs both of the above using an end-of block register and a start-of block register to initiate block operation (initial value of the block counter).

The present embodiment also extends the Interruptible Prefetch/save block scheme to the cache with no boundary limit between cache and RAMSet. This is the same as cache operation based on operation on range of address.

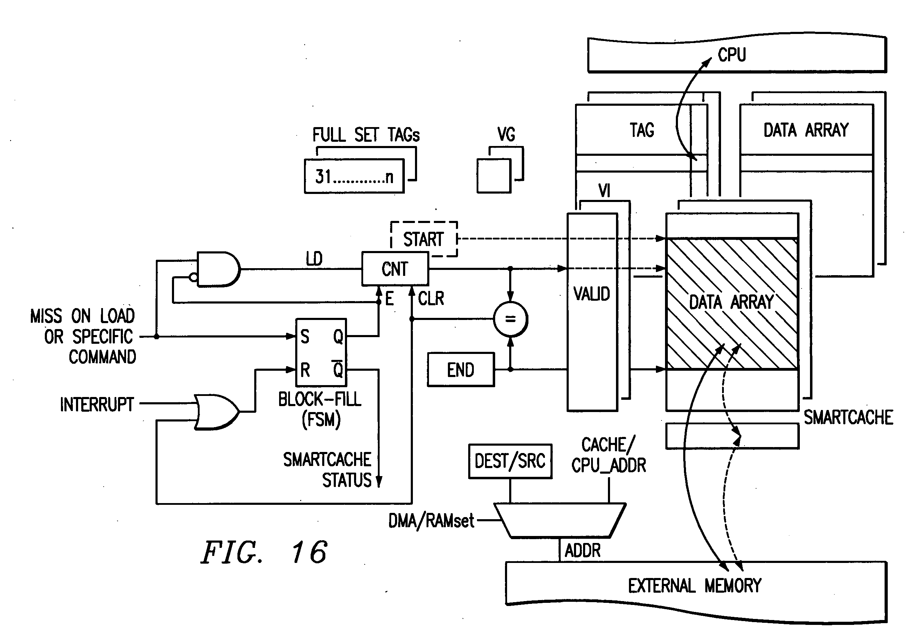

Figure 16 is a block diagram of the cache of Figure 15 illustrating a source/destination register for DMA operation. The RAMSet of the SmartCache is configured as a local memory with DMA support provided by the cache hardware logic or a separate DMA logic. The SmartCache commands are indifferently used in both modes. A register is added to provide the destination/source address that enables re-allocation of data/instruction during transfer from/to external memory. The existing valid bits of the RAMSet are used to monitor the DMA progress, which allows the CPU to have access to the RAMSet concurrently with the DMA operation, including within the range of address of the DMA. Thus, identical control for local memory working as a cache (RAMSet) or as a local memory with DMA is provided.

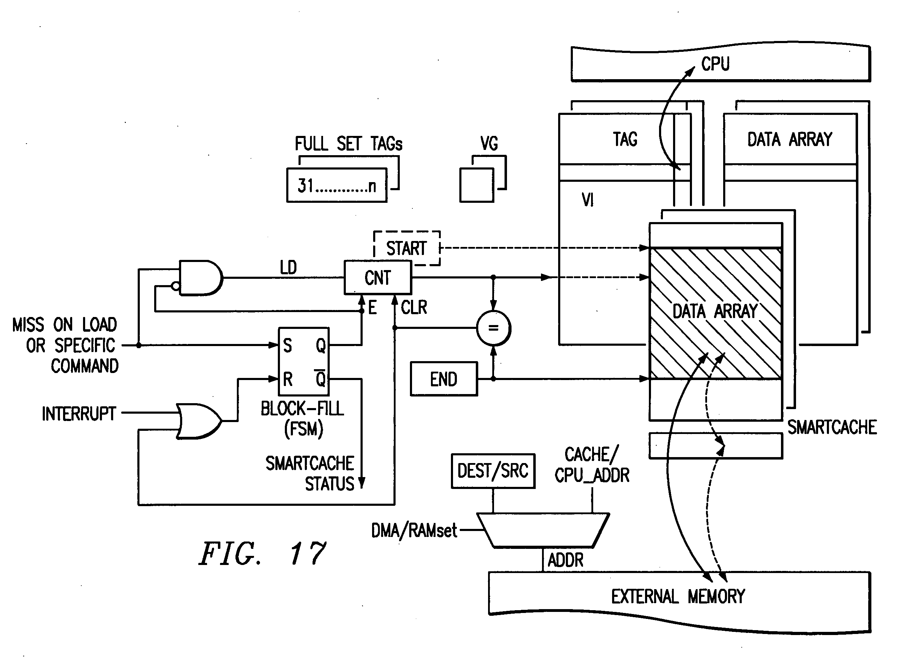

Figure 17 illustrates operation of the cache of Figure 16 using only a global valid bit for DMA completion status. The RAMSet of the SmartCache is configured as a local memory with DMA support provided by the cache hardware logic or a separate DMA logic. The SmartCache commands are indifferently used in both modes. A register is added to provide the destination/source address that enables re-allocation of the data/instruction during transfer from/to external memory. The valid bits of the RAMset are not used but the DMA progress is simply monitored with the status bit to indicate its completion. Thus, concurrent access on cache or on both cache and RAMSet are provided, except in the DMA range during DMA on RAMSet.

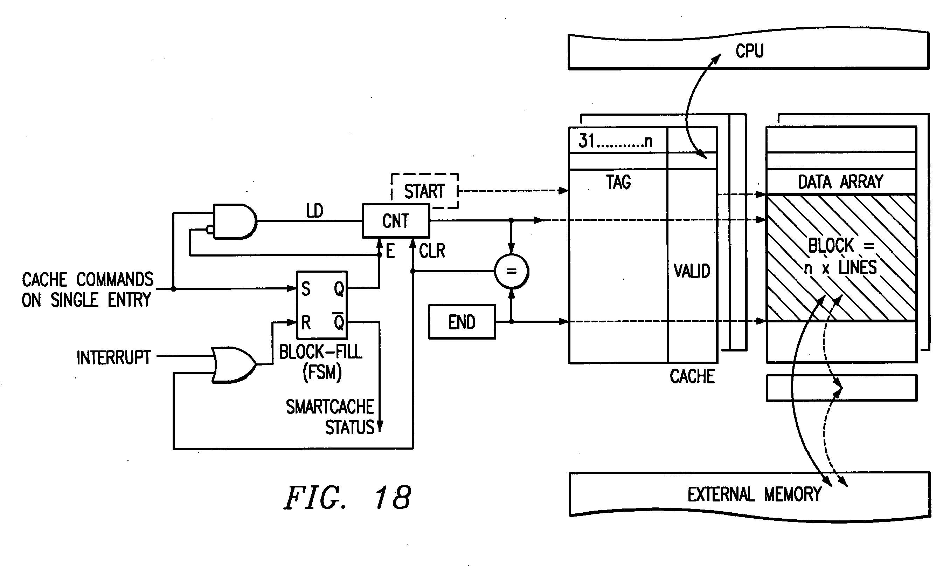

Figure 18 illustrates operation of the cache of Figure 15 in which a block of lines is cleaned or flushed. Programming register "end of block" changes a cache operation such as clean or flush active on a single entry to an operation on a block of lines located between this entry and the entry pointed by the "end of block" register. The function can also be implemented using an "end-of block" register and start-of block (initial value of the block counter).

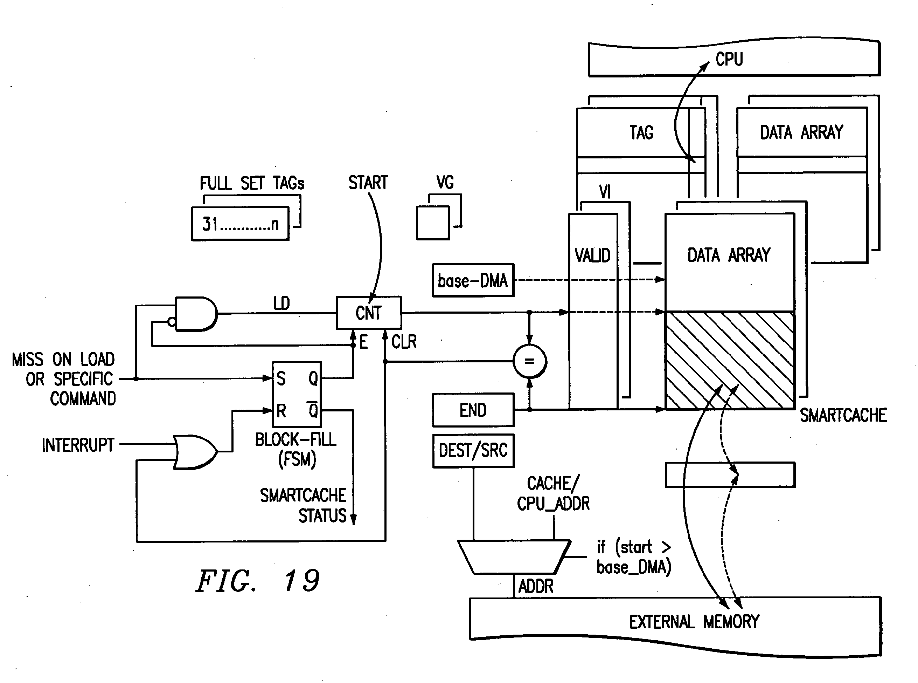

Figure 19 illustrates register and arbitration circuitry in the cache of Figure 15 to support local memory with DMA operation simultaneously with RAM set operation in the same RAM set. This includes register and arbitration logic to support simultaneously local memory with DMA and RAMSet behavior on the same RAMSet. One part of the RAMSet behaves as a RAMSet, the other part behaves as a local memory with DMA. There is one additional base address register (base-DMA) to indicate the beginning of the section of the RAMSet behaving as a local memory with DMA. As this is a working area, only one register is needed to split the RAMSet in two parts.

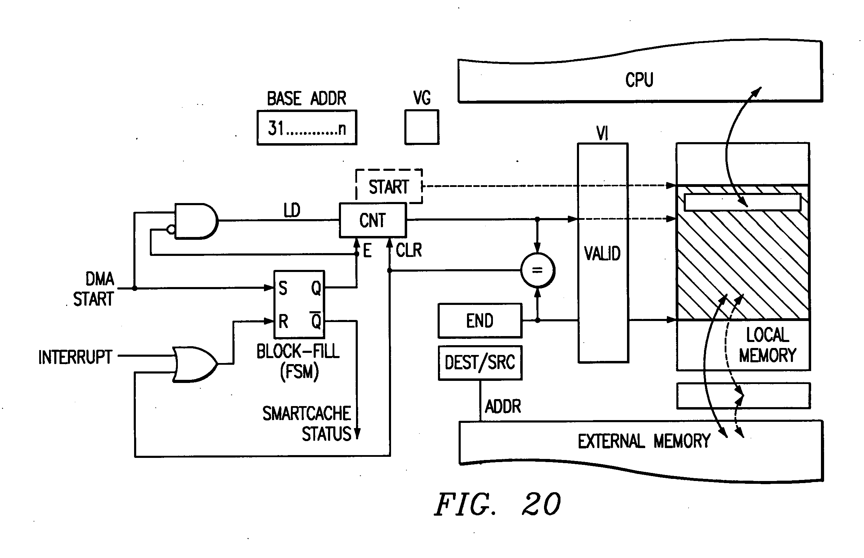

Figure 20 illustrates use of a local valid bit to support concurrent DMA and CPU access in the cache of Figure 15. The local memory is segmented in line with individual valid bits enabling a CPU to access any line outside or inside the DMA range concurrently while the DMA transfer is on going. If a CPU is accessing a line ahead of the DMA, the DMA is momentary stalled to load the line accessed by the CPU and the DMA is then resumed. Prior to loading a line, the DMA engine checks the valid bit to avoid overwriting a valid line, which would have been loaded ahead of the DMA execution in response to a CPU access.

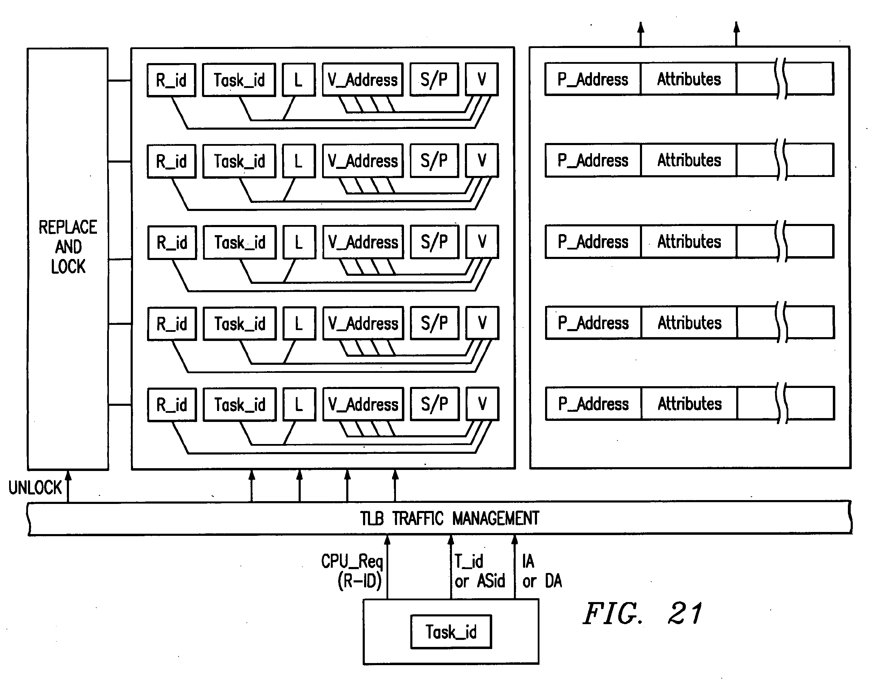

Figure 21 illustrates operation of the TLB of Figure 3 for selective flushing of an entry for a given task or resource. A "resource ID" or/and a task-ID field stored as independent fields in the TLB TAG array is used to selectively flush all entries of a given task or a give resource (requester). Thus, a single operation is provided to flush all entries of a given task located in a TLB. In this embodiment, the TLB cache is made of several levels of TLB, and all levels are flushed simultaneously.

The TLB structure includes a field identifying the processing resource or memory accesses requestor (R_id). This "resource ID" field is part of the TLB TAG array, to enable requestor-selective operations (such as flushes). This does, for instance, permit flushing all entries related to a processor that will be shutdown for energy savings.

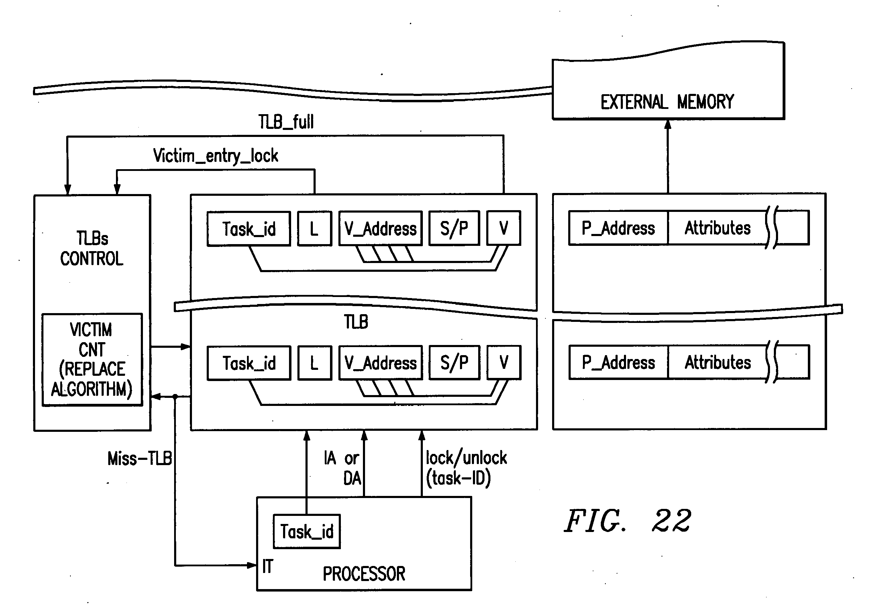

Figure 22 illustrates control circuitry for adaptive replacement of TLB entries in the TLB of Figure 3. In this multiprocessor system with system shared TLB, the need has arisen to control the TLB on a task basis. The function "Lock/unlock all entries of a given task" is provided by the comparison of the task-id field in the TLB. If this field matches the supplied task-id, the associated Lock bit of the matching entry is cleared. In a TLB implemented with a content addressable memory (CAM), all entries with the same task-ID are unlocked in one cycle; in a TLB implemented with a RAM, the function is done through a hardware loop.

In order to support such a function in the most optimized way, an adaptive replacement algorithm taking into account locked entries and empty entries is provided. When the TLB is full, random replacement based on a simple counter (Victim CNT) is used to select the victim entry. On a miss, the lock bit of the victim entry is checked; if it is locked, the victim counter is incremented further in background of the table walk until a non-locked entry is found. When the TLB is not full, the victim counter is incremented further until an empty entry is found. After a flush entry, the victim "counter" is updated with the location value of the flush entry and stasys unchanged until a new line is loaded in order to avoid unnecessary searching. A second implementation provides the capability to do the search instantaneously by providing in an external logic the lock and valid bit.

Thus, Lock/unlock operation on the TLB based on task-ID is provided. A Random Replacement algorithm for TLB is changed into cyclic on empty entry detection and lock victim entry detection.

Still referring to Figure 22, the TLB TAG includes a one-bit-field (S/P) indicating if the corresponding address or page is shared or private. All entries marked as shared can be flushed in one cycle globally or within a task.

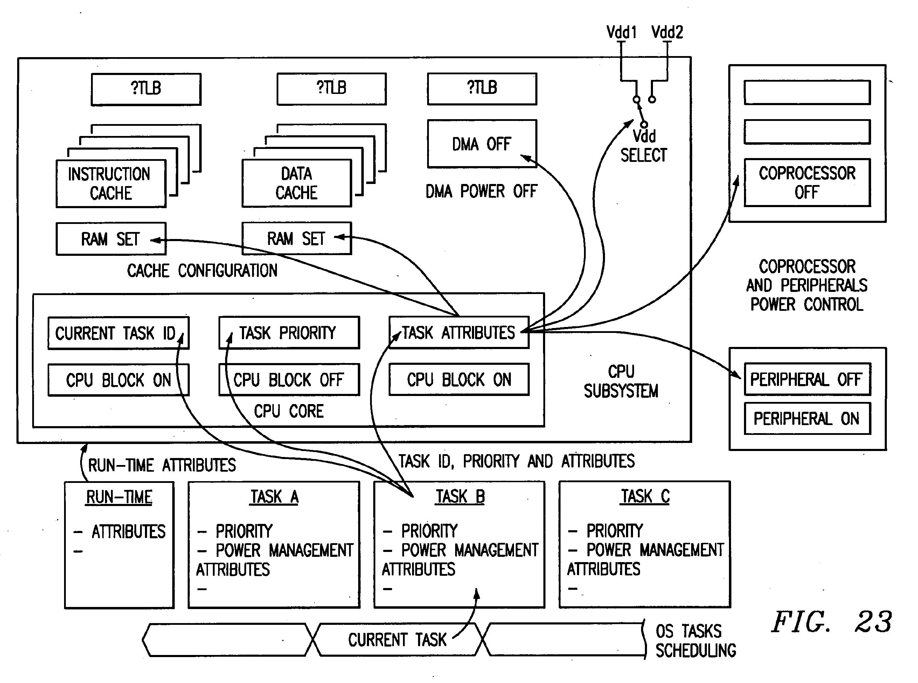

Figure 23 is a block diagram of control circuitry in the megacell of Figure 2 for dynamic control of power management systems using task attributes. A dynamic system power/energy management scheme based on hardware control via run-time and task attributes register is provided. On a given processor, whenever a context switch occurs, the Operating System loads a current task ID register (Current Task ID), task priority and attributes. The attribute register can contains control bit for each major block of the CPU subsystem or the overall system. The supply voltage of each block can be defined according to the current task requirement. Some attributes can be also fixed at run-time. One or multiple power control registers can be loaded with power attributes by a processor each time this task is scheduled on this processor (task attributes), or each time a new scenario is built for the processor or the whole system (run-time attributes).

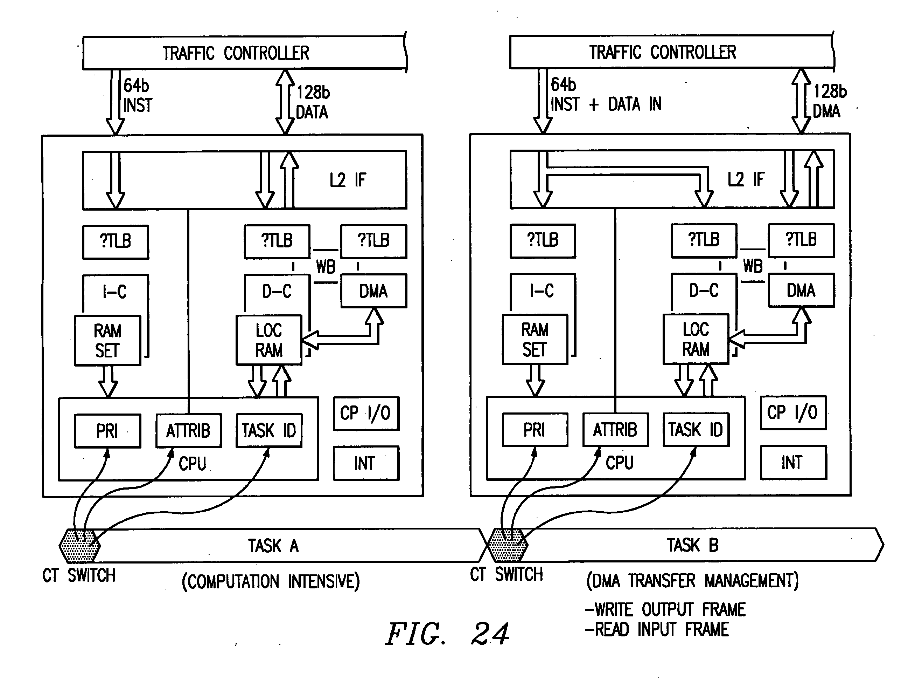

Figure 24 illustrates dynamic hardware configuration of the megacell of Figure 2 using task attributes. A dynamic way to reconfigure a hardware logic module for a given task, according to its resources requirements is provided in this embodiment. A configuration word(s) are written into a register (attrib), a memory or a programmable control structure (FPLA) by a processor each time its operating system switches to a new task. This permits reuse of complex hardware logic for multiple functions, but also dynamically optimizes performance and energy consumption of this logic for a broader application range.

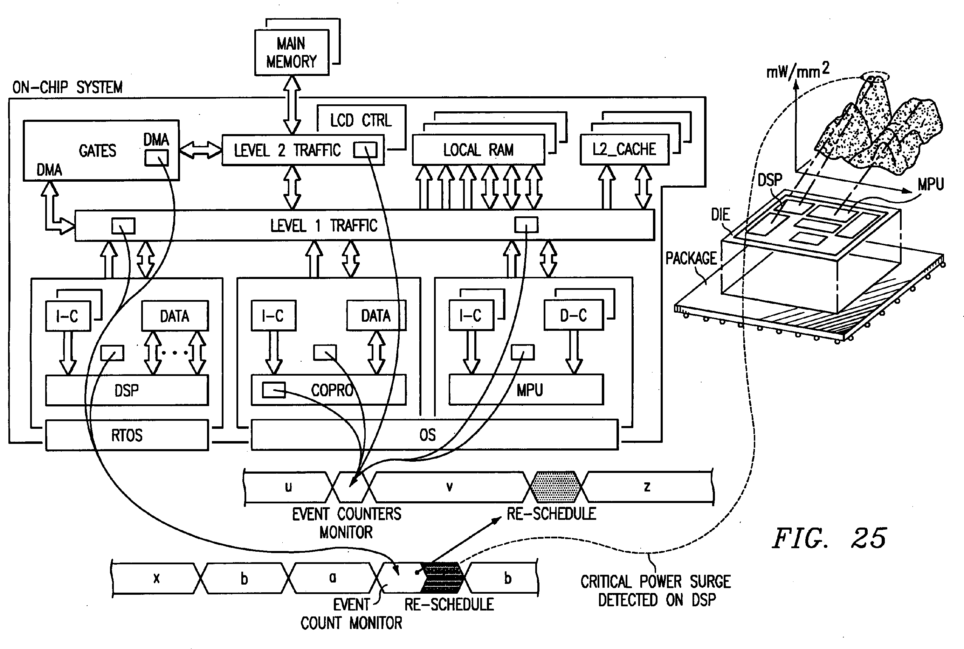

Figure 25 illustrates task based event profiling to perform task scheduling for control of power dissipation within the system of Figure 1. A way to measure system energy consumed by a given task is provided. This measure is performed through a set of HW counters (event counters) triggered by a task ID. Each counter records activity associated with a specific region of the megacell that can be correlated with power consumption, such as signal transitions on a bus, for example. In order to profile a given task, the counters are enabled only when the given task is active, as indicated by the task ID register.

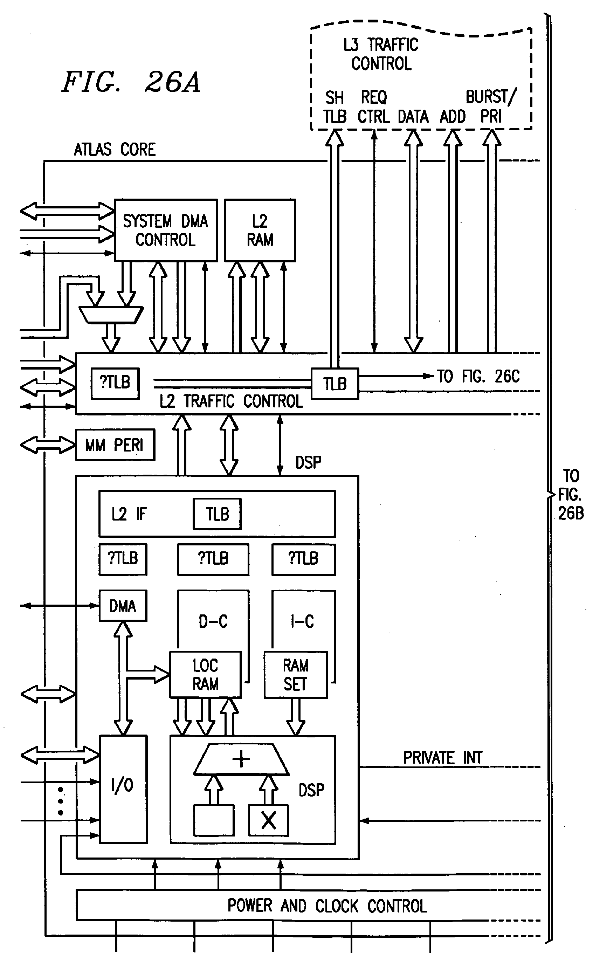

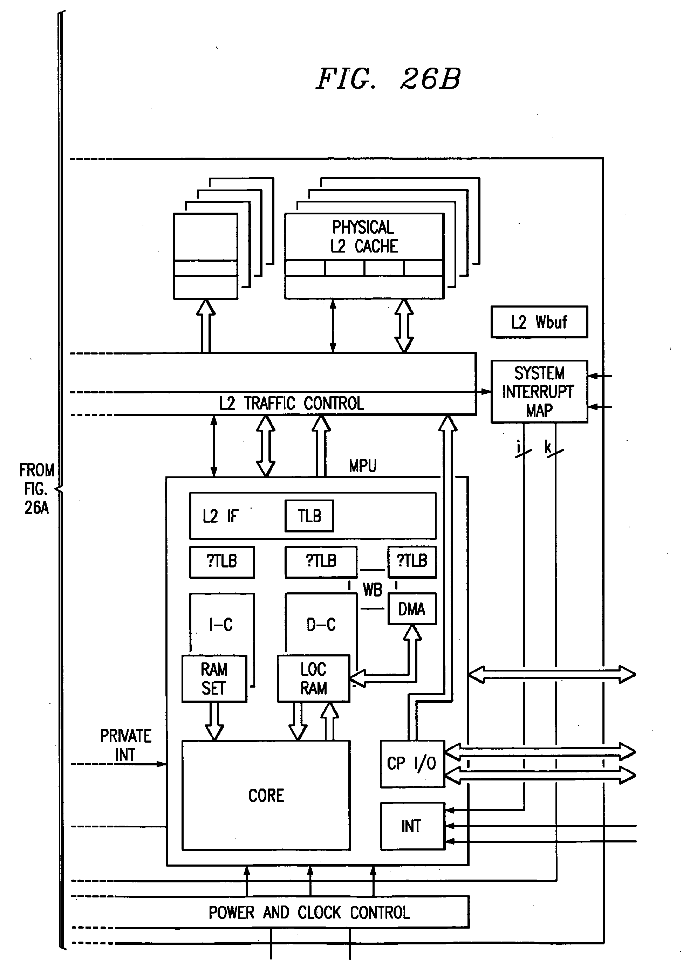

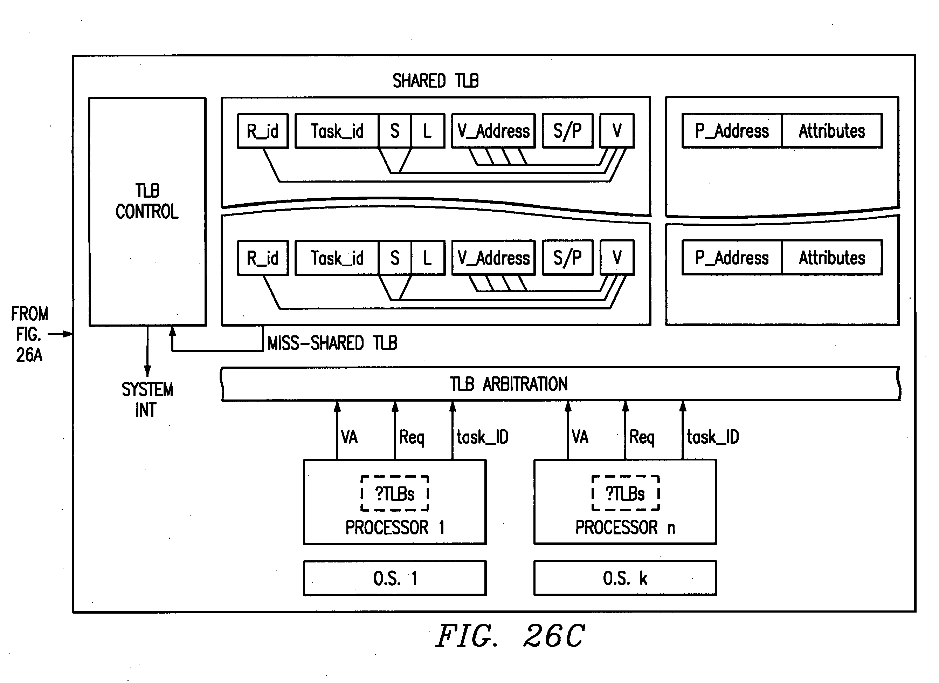

Figure 26 illustrates operation of the level 2 TLB of Figure 2 while being shared between different operating systems. In a unified memory management context, a TLB is shared between different OS environments to accelerate address translation of different processors accessing a common memory environment, and insure protection of this environment. The term "processor", in this case, designates any access requestor to the memory environment. It can be a microprocessor unit, a DSP, an application specific processor (ASP), coprocessor or DMA controller. This permits efficient use of common hardware table entries in a buffer between different processors that will typically have heterogeneous needs in terms of frequently accessed address pages.

This shared TLB concept is extended in a multi-level TLB hierarchy system of the present embodiment, where each processor has its own micro-TLB whose page faults are directed to the shared TLB.

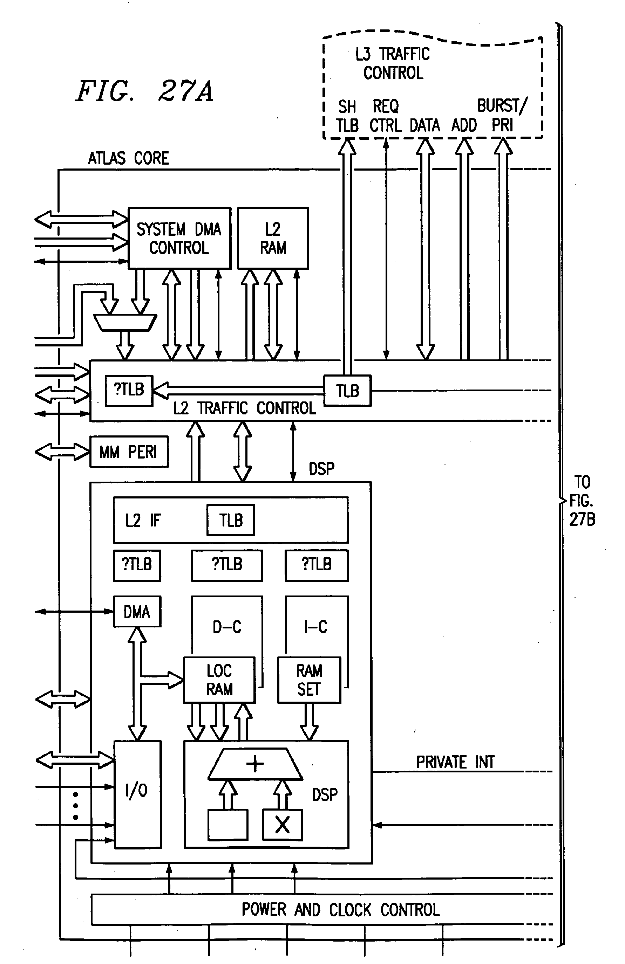

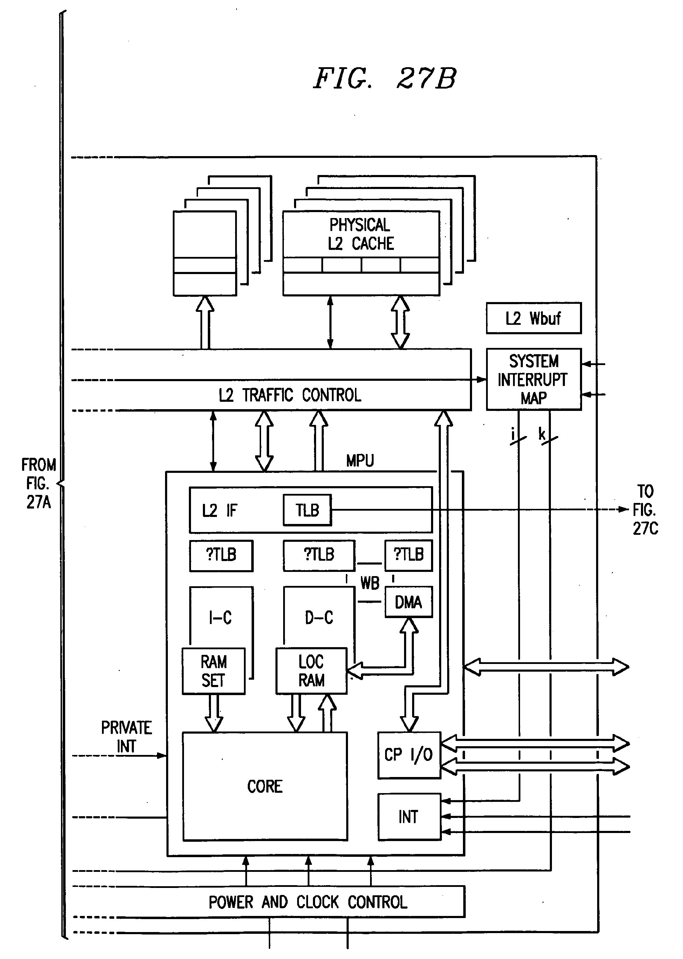

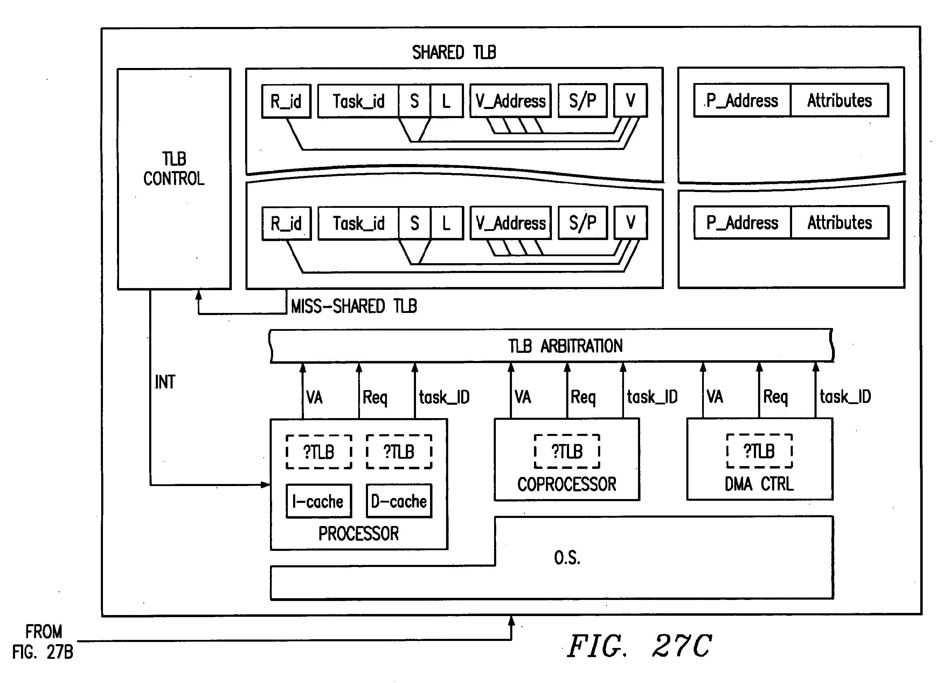

Figure 27 illustrates operation of the level 1 TLB of Figure 2 while being shared between different memory access requestors operating under a common operating system. A TLB is shared between different processing resources or memory access requestors (processor, coprocessor, DMA) in a common OS environment to accelerate address translation when accessing a common memory environment, and insure protection of this environment.

This permits efficiently use of common hardware between different hardware resources that will typically have heterogeneous needs in terms of frequently accessed address pages.

This shared TLB concept is also be used in the multi-level TLB hierarchy system of this embodiment, where each processor has its own micro-TLB, whose page faults are directed to the shared TLB.

### Digital System Embodiment

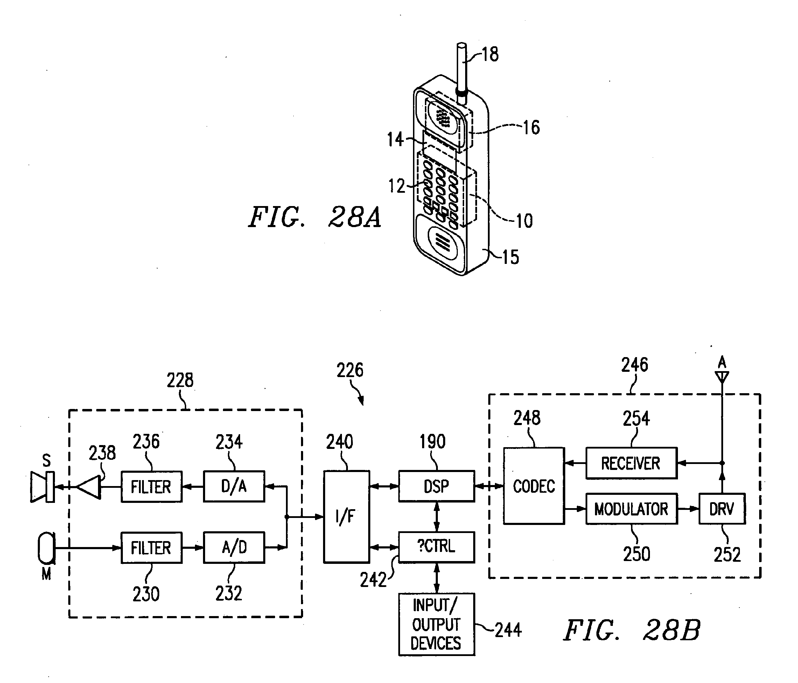

Figure 28A illustrates an exemplary implementation of an example of such an integrated circuit in a mobile telecommunications device, such as a mobile telephone with integrated keyboard 12 and display 14. As shown in Figure 28, the digital system 10 with a megacell according to Figure 2 is connected to the keyboard 12, where appropriate via a keyboard adapter (not shown), to the display 14, where appropriate via a display adapter (not shown) and to radio frequency (RF) circuitry 16. The RF circuitry 16 is connected to an aerial 18.

Figure 28B is a block diagram representation of the telecommunications device of Figure 28A. Specifically, Figure 28B illustrates the construction of a wireless communications system, namely a digital cellular telephone handset 226. It is contemplated, of course, that many other types of communications systems and computer systems may also benefit from the present invention, particularly those relying on battery power. Examples of such other computer systems include personal digital assistants (PDAS), portable computers, and the like. As power dissipation is also of concern in desktop and line-powered computer systems and micro-controller applications, particularly from a reliability standpoint, it is also contemplated that the present invention may also provide benefits to such line-powered systems.

Handset 226 includes microphone M for receiving audio input, and speaker S for outputting audible output, in the conventional manner. Microphone M and speaker S are connected to audio interface 228 which, in this example, converts received signals into digital form and vice versa. In this example, audio input received at microphone M is processed by filter 230 and analog-to-digital converter (ADC) 232. On the output side, digital signals are processed by digital-to-analog converter (DAC) 234 and filter 236, with the results applied to amplifier 238 for output at speaker S.

The output of ADC 232 and the input of DAC 234 in audio interface 228 are in communication with digital interface 240. Digital interface 240 is connected to micro-controller 242 and to digital signal processor (DSP) 190. Micro-controller 242 and DSP 190 are implemented in a megacell such as illustrated in Figure 2 and includes the various aspects disclosed herein.

Micro-controller 242 controls the general operation of handset 226 in response to input/output devices 244, examples of which include a keypad or keyboard, a user display, and add-on cards such as a SIM card. Micro-controller 242 also manages other functions such as connection, radio resources, power source monitoring, and the like. In this regard, circuitry used in general operation of handset 226, such as voltage regulators, power sources, operational amplifiers, clock and timing circuitry, switches and the like are not illustrated in Figure 28B for clarity; it is contemplated that those of ordinary skill in the art will readily understand the architecture of handset 226 from this description.

In handset 226, DSP 190 is connected on one side to interface 240 for communication of signals to and from audio interface 228 (and thus microphone M and speaker S), and on another side to radio frequency (RF) circuitry 246, which transmits and receives radio signals via antenna A. Conventional signal processing performed by DSP 190 may include speech coding and decoding, error correction, channel coding and decoding, equalization, demodulation, encryption, voice dialing, echo cancellation, and other similar functions to be performed by handset 190.

RF circuitry 246 bidirectionally communicates signals between antenna A and DSP 190. For transmission, RF circuitry 246 includes codec 248 that codes the digital signals into the appropriate form for application to modulator 250. Modulator 250, in combination with synthesizer circuitry (not shown), generates modulated signals corresponding to the coded digital audio signals; driver 252 amplifies the modulated signals and transmits the same via antenna A. Receipt of signals from antenna A is effected by receiver 254, which applies the received signals to codec 248 for decoding into digital form, application to DSP 190, and eventual communication, via audio interface 228, to speaker S.

Fabrication of the digital systems disclosed herein involves multiple steps of implanting various amounts of impurities into a semiconductor substrate and diffusing the impurities to selected depths within the substrate to form transistor devices. Masks are formed to control the placement of the impurities. Multiple layers of conductive material and insulative material are deposited and etched to interconnect the various devices. These steps are performed in a clean room environment.

A significant portion of the cost of producing the data processing device involves testing. While in wafer form, individual devices are biased to an operational state and probe tested for basic operational functionality. The wafer is then separated into individual dice which may be sold as bare die or packaged. After packaging, finished parts are biased into an operational state and tested for operational functionality.

The digital systems disclosed herein contain hardware extensions for advanced debugging features. These assist in the development of an application system. Since these capabilities are part of the megacell itself, they are available utilizing only a JTAG interface with extended operating mode extensions. They provide simple, inexpensive, and speed independent access to the core for sophisticated debugging and economical system development, without requiring the costly cabling and access to processor pins required by traditional emulator systems or intruding on system resources.

As used herein, the terms "applied," "connected," and "connection" mean electrically connected, including where additional elements may be in the electrical connection path. "Associated" means a controlling relationship, such as a memory resource that is controlled by an associated port. The terms assert, assertion, de-assert, de-assertion, negate and negation are used to avoid confusion when dealing with a mixture of active high and active low signals. Assert and assertion are used to indicate that a signal is rendered active, or logically true. De-assert, de-assertion, negate, and negation are used to indicate that a signal is rendered inactive, or logically false.

While the invention has been described with reference to illustrative embodiments, this description is not intended to be construed in a limiting sense. Various other embodiments of the invention will be apparent to persons skilled in the art upon reference to this description.

## Claims

1. A digital system comprising:
a plurality of processors;
a plurality of private level 1 caches, each associated with a respective one of the plurality of processors;
a shared level 2 cache having a plurality of segments per entry connected to transfer a data segment to each private level 1 cache;
a level 3 physical memory connected to provide a plurality of data segments to the shared level 2 cache, wherein the shared level 2 cache is operable to request transfer of a first plurality of segments in response to a first miss in a first private level 1 cache; and
**characterised in that**
the shared level 2 cache comprises a portion that is configurable as a RAMset, wherein the RAMset is operable to load a block of segments in an interruptible manner and wherein the shared level 2 cache is operable to stop transferring the first plurality of segments and to start transferring a second plurality of segments in response to a second miss in a second private level 1 cache.

2. The digital system of Claim 1, wherein the shared level 2 cache comprises a plurality of tag entries, wherein each tag entry has a resource ID field.

3. The digital system according to Claim 2, wherein each tag entry has a task ID field.

4. The digital system according to any of Claims 2-3, further comprising a shared translation lookaside buffer (TLB), wherein the TLB has a plurality of page entries, and wherein each page entry has a resource ID field.

5. The digital system according to any of Claims 2-4, wherein each page entry has a task ID field.

6. The digital system according to any preceding claim, wherein the shared level 2 cache comprises control circuitry that can be configured to operate in DMA mode.

7. The digital system according to any of Claims 4-6, wherein each page entry of the shared TLB has a endianess field.

8. The digital system according to any of Claims 1-7 further comprising configuration circuitry associated with at least a first one of the plurality of processors, wherein the configuration circuitry is responsive to a task ID value to select an operating parameter for the first processor.

9. The digital system (10) according to any of Claims 1-8 being a cellular telephone, further comprising:
an integrated keyboard (12) connected to the CPU via a keyboard adapter;
a display (14), connected to the CPU via a display adapter;
radio frequency (RF) circuitry (16) connected to the CPU; and
an aerial (18) connected to the RF circuitry.

## Patentansprüche

1. Digitales System, mit:
mehreren Prozessoren;
mehreren privaten Ebene-1-Cache-Speichern, wovon jeder einem entsprechenden der mehreren Prozessoren zugeordnet ist;
einem gemeinsam genutzten Ebene-2-Cache-Speicher, der mehrere Segmente pro Eintrag besitzt und so angeschlossen ist, dass ein Datensegment an jeden privaten Ebene-1-Cache-Speicher übertragen werden kann; und
einem physikalischen Ebene-3-Speicher, der angeschlossen ist, um mehrere Datensegmente für den gemeinsam genutzten Ebene-2-Cache-Speicher bereitzustellen, wobei der gemeinsam genutzte Ebene-2-Cache-Speicher betreibbar ist, um in Reaktion auf einen ersten Fehltreffer im ersten privaten Ebene-1-Cache-Speicher die Übertragung einer ersten Mehrzahl von Segmenten anzufordern; **dadurch gekennzeichnet, dass**
der gemeinsam genutzte Ebene-2-Cache-Speicher einen Abschnitt aufweist, der als ein RAMset konfigurierbar ist, wobei der RAMset betreibbar ist, um einen Block von Segmenten auf unterbrechbare Weise zu laden, wobei der gemeinsam genutzte Ebene-2-Cache-Speicher betreibbar ist, um in Reaktion auf einen zweiten Fehltreffer in einem zweiten privaten Ebene-1-Cache-Speicher die Übertragung der ersten Mehrzahl von Segmenten anzuhalten und die Übertragung einer zweiten Mehrzahl von Segmenten zu beginnen.

2. Digitales System nach Anspruch 1, wobei der gemeinsam genutzte Ebene-2-Cache-Speicher mehrere Tag-Einträge enthält, wobei jeder Tag-Eintrag ein Betriebsmittel-ID-Feld besitzt.

3. Digitales System nach Anspruch 2, wobei jeder Tag-Eintrag ein Aufgaben-ID-Feld besitzt.

4. Digitales System nach einem der Ansprüche 2-3, das ferner einen gemeinsam genutzten Übersetzungs-Assoziativpufferspeicher (TLB) besitzt, wobei der TLB mehrere Seiteneinträge besitzt und wobei jeder Seiteneintrag ein Betriebsmittel-ID-Feld besitzt.

5. Digitales System nach einem der Ansprüche 2-4, wobei jeder Seiteneintrag ein Aufgaben-ID-Feld besitzt.

6. Digitales System nach einem vorhergehenden Anspruch, wobei der gemeinsam genutzte Ebene-2-Cache-Speicher eine Steuerschaltungsanordnung enthält, die konfiguriert werden kann, um in einem DMA-Modus zu arbeiten.

7. Digitales System nach einem der Ansprüche 4-6, wobei jeder Seiteneintrag des gemeinsam genutzten TLB ein Byte-Reihenfolgen-Feld (Endianess-Feld) besitzt.

8. Digitales System nach einem der Ansprüche 1-7, das ferner eine Konfigurationsschaltungsanordnung enthält, die wenigstens einem ersten der mehreren Prozessoren zugeordnet ist, wobei die Konfigurationsschaltungsanordnung in Reaktion auf einen Aufgaben-ID-Wert einen Betriebsparameter für den ersten Prozess auswählt.

9. Digitales System (10) nach einem der Ansprüche 1-8, das ein Zellentelefon ist und ferner umfasst:
eine integrierte Tastatur (12), die mit der CPU über einen Tastaturadapter verbunden ist;
eine Anzeige (14), die mit der CPU über einen Anzeigeadapter verbunden ist;
eine Hochfrequenz-Schaltungsanordnung (HF-Schaltungsanordnung) (16), die mit der CPU verbunden ist;
eine Antenne (18), die mit der HF-Schaltungsanordnung verbunden ist.

## Revendications

1. Système numérique, comprenant :
une pluralité de processeurs,
une pluralité de mémoires caches privées de niveau 1, chacune associée avec un respectif de la pluralité de processeurs,
une mémoire cache partagée de niveau 2 ayant une pluralité de segments par entrée, connectée pour transférer un segment de données dans chaque mémoire cache privée de niveau 1,
une mémoire physique de niveau 3, connectée pour fournir une pluralité de segments de données à la mémoire cache partagée de niveau 2, la mémoire cache partagée de niveau 2 étant opérationnelle pour demander le transfert d'une première pluralité de segments en réponse à un premier accès manqué dans une première mémoire cache privée de niveau 1, et
**caractérisé en ce que**
la mémoire cache partagée de niveau 2 comprend une partie qui est configurable sous la forme d'un ensemble de mémoire vive dans lequel l'ensemble de mémoire vive est opérationnel pour charger un bloc de segments d'une manière pouvant être interrompue, et dans lequel la mémoire cache partagée de niveau 2 est opérationnelle pour cesser le transfert de la première pluralité de segments et pour démarrer le transfert d'une seconde pluralité de segments en réponse à un second accès manqué dans une seconde mémoire cache privée de niveau 1.

2. Système numérique selon la revendication 1, dans lequel la mémoire cache partagée de niveau 2 comprend une pluralité d'entrées d'étiquette, dans lequel chaque entrée d'étiquette a un champ d'identifiant de ressource.

3. Système numérique selon la revendication 2, dans lequel chaque entrée d'étiquette a un champ d'identifiant de tâche.

4. Système numérique selon la revendication 2 ou 3, comprenant en outre un répertoire de pages actives partagé (TLB), dans lequel le TLB a une pluralité d'entrées de page, et
dans lequel chaque entrée de page a un champ d'identifiant de ressource.

5. Système numérique selon l'une quelconque des revendications 2 à 4, dans lequel chaque entrée de page a un champ d'identifiant de tâche.

6. Système numérique selon l'une quelconque des revendications précédentes, dans lequel la mémoire cache partagée de niveau 2 comprend des circuits de contrôle qui peuvent être configurés pour fonctionner en mode d'accès direct à la mémoire (DMA).

7. Système numérique selon l'une quelconque des revendications 4 à 6, dans lequel chaque entrée de page du TLB partagé a un champ de forme endian.

8. Système numérique selon l'une quelconque des revendications 1 à 7, comprenant en outre des circuits de configuration associés avec au moins un premier de la pluralité de processeurs, dans lequel les circuits de configuration sont sensibles à une valeur d'identifiant de tâche pour sélectionner un paramètre de service pour le premier processeur.

9. Système numérique (10) selon l'une quelconque des revendications 1 à 8, étant un téléphone cellulaire, comprenant en outre :
un clavier intégré (12) relié à l'unité centrale (CPU) via un adaptateur de clavier,
un affichage (14), relié à la CPU via un adaptateur d'affichage,
des circuits (16) de radiofréquence (RF) reliés à la CPU, et
une antenne (18) reliée à l'ensemble de circuits RF.
